# EUROPEAN PATENT APPLICATION

(11) **EP 4 694 274 A1**
(43) Date of publication of application: **11.02.2026**
(21) Application number: 24779642.8
(22) Date of filing: 18.03.2024
(51) Int. Cl.: H04W 16/30, H04W 28/16, H04W 92/20

(54) **TERMINAL DEVICE, CONTROL DEVICE, COMMUNICATION METHOD, AND INFORMATION PROCESSING METHOD**

(30) Priority: 31.03.2023 JP 2023059480
(71) Applicant: Sony Group Corporation, Tokyo 108-0075 (JP)
(72) Inventor: TAKAHASHI, Mitsuki, Tokyo 108-0075 (JP); MATSUDA, Hiroki, Tokyo 108-0075 (JP); UCHIYAMA, Hiromasa, Tokyo 108-0075 (JP); KIMURA, Ryota, Tokyo 108-0075 (JP)
(74) Representative: Witte, Weller & Partner Patentanwälte mbB
(86) International application number: PCT/JP2024/010468
(87) International publication number: WO 2024/203517

(57) **Abstract**

A terminal device performs communication via a point cell formed by two or more transmission devices among a plurality of transmission devices. The terminal device includes an acquisition unit that acquires information for identifying a transmission device group, and a communication control unit that executes processing related to the communication via the point cell based on the information acquired.

## Description

### Field

The present disclosure relates to a terminal device, a control device, a communication method, and an information processing method.

### Background

Technology related to wireless communication has been actively developed. The next generation wireless communication is required to further improve communication performance (e.g., improvement of frequency utilization efficiency). As one technique for improving frequency utilization efficiency, a technique of concentrating power at a specific point using a phase difference of a near field is disclosed (e.g., Non Patent Literature 1).

### Citation List

### Non Patent Literature

Non Patent Literature 1: Mingyao Cui, Linglong Dai, Robert Schober, and Lajos Hanzo, "Near-Field Wideband Beamforming for Extremely Large Antenna Arrays," arXiv preprint arXiv: 2109.10054, Sep. 2021.
Non Patent Literature 2: 3GPP TS 38.401 V16.8.0 (2021-12), 3rd Generation Partnership Project; Technical Specification Group Radio Access Network; NG-RAN; Architecture description (Release 16)

### Technical Problem

It is assumed that more advanced spatial multiplex becomes possible by the above technique (power concentration technique to a specific point). However, simply applying this technique to a radio access network does not always realize wireless communication with high communication performance (e.g., high frequency utilization efficiency, high capacity, high speed, low delay, high reliability, majority high density, low power saving, or low processing load).

Therefore, the present disclosure proposes a terminal device, a control device, a communication method, and an information processing method capable of realizing high communication performance.

Note that the above problem or object is merely one of a plurality of problems or objects that can be solved or achieved by a plurality of embodiments disclosed in the present specification.

### Solution to Problem

In order to solve the above problem, terminal device according to one embodiment of the present disclosure that performs communication via a point cell formed by two or more transmission devices among a plurality of transmission devices, the terminal device includes: an acquisition unit configured to acquire information for identifying a transmission device group; and a communication control unit configured to execute processing related to the communication via the point cell based on the information acquired.

### Brief Description of Drawings

FIG. 1 is a diagram illustrating a power concentration technique (pointforming).
FIG. 2 is a diagram illustrating a near field and a far field.
FIG. 3 is a chart illustrating a Fraunhofer distance that is a boundary between the near field and the far field.
FIG. 4 is a diagram illustrating an example of pointforming using distributed antennas.
FIG. 5 is a diagram illustrating a network configuration that can be adopted by a communication according to a present embodiment.
FIG. 6 is a diagram illustrating a functional configuration example of a communication system according to an embodiment of the present disclosure.
FIG. 7 is a diagram illustrating a configuration of a management device according to the present embodiment.
FIG. 8 is a diagram illustrating a configuration of a base station according to the present embodiment.
FIG. 9 is a diagram illustrating a configuration of a relay station according to the present embodiment.
FIG. 10 is a diagram illustrating a configuration of a terminal device according to the present embodiment.
FIG. 11 is a diagram illustrating an example of an NG RAN architecture.
FIG. 12 is a diagram illustrating a boundary line between a CU and a DU.
FIG. 13 is a diagram illustrating an example of an IAB architecture (C-plane).
FIG. 14 is a diagram illustrating an example of an architecture of a gNB in a state that a CP and an UP are separated.
FIG. 15 is a flowchart illustrating an example of an initial connection process.
FIG. 16 is a diagram illustrating a contention based random access procedure.
FIG. 17 is a diagram illustrating a non-contention based random access procedure.
FIG. 18 is a diagram illustrating a two-step random access procedure.
FIG. 19 is a sequence diagram illustrating an example of a communication procedure between the terminal device and the base station.
FIG. 20 is a diagram illustrating an example of grouping according to Type 1-1.
FIG. 21 is a diagram illustrating another example of grouping according to Type 1-1.
FIG. 22 is a sequence diagram illustrating a group determination method and a procedure according to Type 1.
FIG. 23 is a diagram illustrating a correspondence relationship between a procedure according to Type 1 and the contention based random access procedure.
FIG. 24 is a diagram illustrating a correspondence relationship between the procedure according to Type 1 and the non-contention based random access procedure.
FIG. 25 is a sequence diagram illustrating a group determination method and a procedure according to Type 2.
FIG. 26 is a diagram illustrating a correspondence relationship between a procedure according to Type 2 and the contention based random access procedure.
FIG. 27 is a diagram illustrating a correspondence relationship between the procedure according to Type 2 and the non-contention based random access procedure.

### Description of Embodiments

Hereinafter, embodiments of the present disclosure will be described with reference to the drawings. In the following embodiment, same parts are given the same reference signs to omit redundant description.

In addition, in the present specification and the drawings, a plurality of components having substantially the same functional configurations may be distinguished by attaching a different number or alphabet after the same reference sign. For example, a plurality of configurations having substantially the same functional configuration is distinguished as terminal devices 40₁, 40₂, and 40₃ as necessary. However, when it is not particularly necessary to distinguish each of the plurality of components having substantially the same functional configuration, only the same reference sign is given. For example, in a case where it is not necessary to particularly distinguish the terminal devices 40₁, 40₂, and 40₃, they are simply referred to as terminal devices 40.

In the description below, one or more embodiments (including examples and modifications) can be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

The present disclosure will be described according to the following order of items.
1. Outline
1-1. Problem
1-2. Power concentration technique (pointforming)
1-3. Outline of solution
2. Configuration of communication system
2-1. Network configuration example
2-2. Functional configuration example of communication system
2-3. Configuration of management device
2-4. Configuration of base station
2-5. Configuration of relay station
2-6. Configuration of terminal device
2-7. Network architecture
3. Basic operation of communication system
3-1. Example of connection procedure
3-2. Example of communication procedure
4. Operation of communication system
4-1. Outline of operation of communication system
4-2. Features of transmission device
4-3. Detailed operation of communication system (Type 1)
4-4. Detailed operation of communication system (Type 2)
5. Modification
6. Conclusion

### <<1. Outline>>

Before describing the present embodiment in detail, an outline of the present embodiment will be described.

### <1-1. Problem>

In recent years, discussion on next-generation wireless communication has been advanced. In order to realize requirements such as higher speed communication than 5G NR, low delay and high reliability communication, majority high density communication, and simultaneous support of a plurality of these requirements, further improvement in frequency utilization efficiency is required. As one technique of improving frequency utilization efficiency, a technique to concentrate power at a specific point using a phase difference of a near field (hereinafter simply referred to as a power concentration technique) is disclosed.

It is assumed that more advanced spatial multiplex is possible by the power concentration technique. However, simply applying this technique to a radio access network does not always realize wireless communication with high communication performance (e.g., high frequency utilization efficiency, high capacity, high speed, low delay, high reliability, majority high density, low power saving, or low processing load).

For example, in order to concentrate power on a specific point, cooperative control of a plurality of transmission devices (e.g., base station, radio unit (RU), or antenna device) is required. When the terminal device performs communication at an arbitrary position by using the power concentration technique, there is an excessive degree of freedom in selecting a transmission device used for communication because the terminal device uses a plurality of transmission devices for communication. In particular, when a distributed antenna is used for communication, it is assumed that the number of transmission devices used by the base station to establish a communication state with the terminal device is extremely large.

As the number of transmission devices used for communication increases, the accuracy of power concentration improves. However, it is not realistic to cause numerous randomly selected transmission devices to perform the cooperative control from the viewpoint of cost for control. In order to solve this problem, a system for efficiently selecting transmission devices to be used for communication is required.

Therefore, in the present embodiment, the system for efficiently selecting a transmission device to be used for communication will be examined.

Note that, in the following description, the power concentration technique may be referred to as pointforming.

### <1-2. Power concentration technique (pointforming)>

Before describing an outline of solution, the power concentration technique (pointforming) will be described.

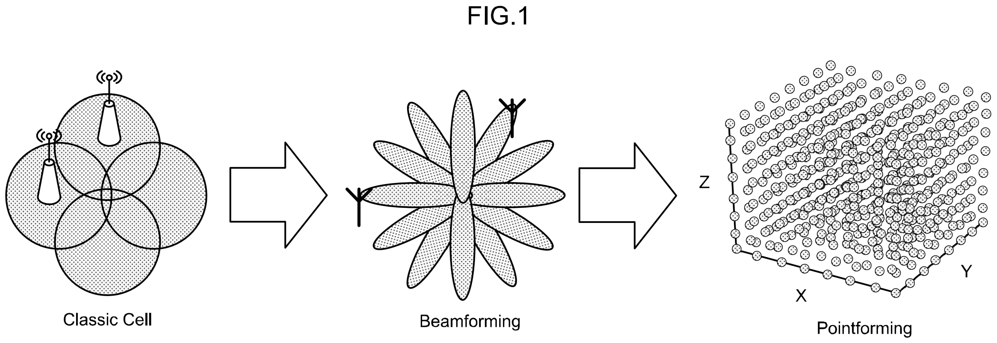

FIG. 1 is a diagram illustrating the power concentration technique (pointforming). In conventional cellular mobile communication, a base station (e.g., eNodeB (eNB), gNodeB (gNB), or a RAN node (including EUTRAN and NGRAN)) forms a planar or beam-like cell. In the example in FIG. 1, a diagram on the left side (classic cell) is a diagram illustrating how the base station forms a planar cell, and the diagram at the center (beamforming) is a diagram illustrating how the base station forms a beam-like cell. As a result, the base station provides communication to the terminal device (e.g., user equipment (UE)). In the next-generation cellular communication, in order to satisfy advanced requirements, such as further high-speed communication and low-delay and high-reliability communication, it is required to increase frequency utilization efficiency to the utmost limit.

As a technique currently attracting attention, there is a technique of forming a cell in terms of points (e.g., power concentration technique). This is a technique of forming point-like cells beyond spatial separation by conventional beamforming by coordinately controlling numerous transmission antennas. In the example in FIG. 1, the diagram on the right side (pointforming) is a diagram illustrating how the base station forms a dotted cell. Hereinafter, this technique is referred to as pointforming, but the term is not limited thereto. In conventional beamforming, beam directions cannot be multiplexed, but in the pointforming, three-dimensional multiplexing can be performed. This enables further multi-terminal simultaneous communication. In addition, interference with multiple terminals can be suppressed by pointforming. As a result, improvement in communication quality of the entire system, reduction in a communication disconnection rate, and further multi-connection communication can be expected.

The pointforming is a technique of maximizing the reception power at a specific point by cooperatively operating numerous transmission antennas such that each radio wave is in-phase synthesized at the specific point in consideration of a phase difference of each radio wave transmitted from the large number of transmission antennas. Since radio waves transmitted from the numerous transmission antennas are received at random phases at points other than the specific point, reception power is suppressed by averaging. As a result, pointforming to form a cell at the specific point is realized. Here, in the phase difference control of radio waves transmitted from numerous transmission antennas, the control device may control, for example, an initial phase of each transmission antenna or may control an amplitude of each transmission antenna.

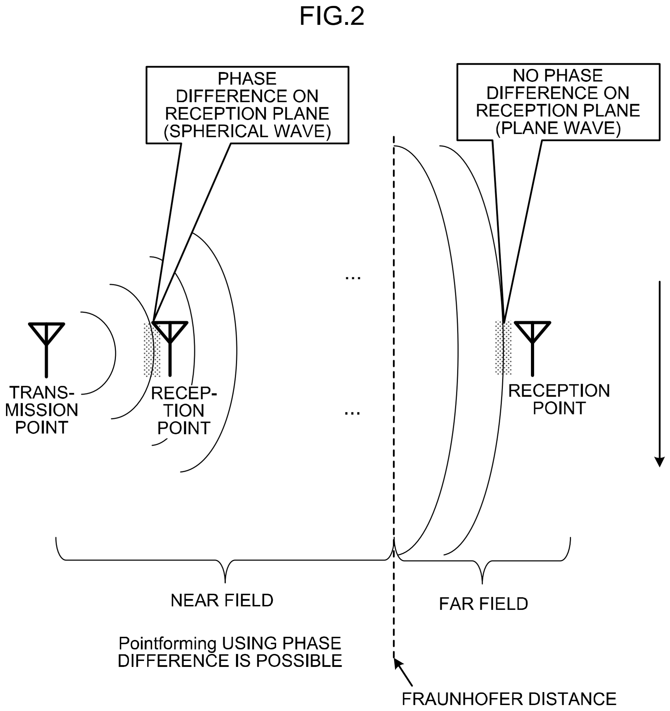

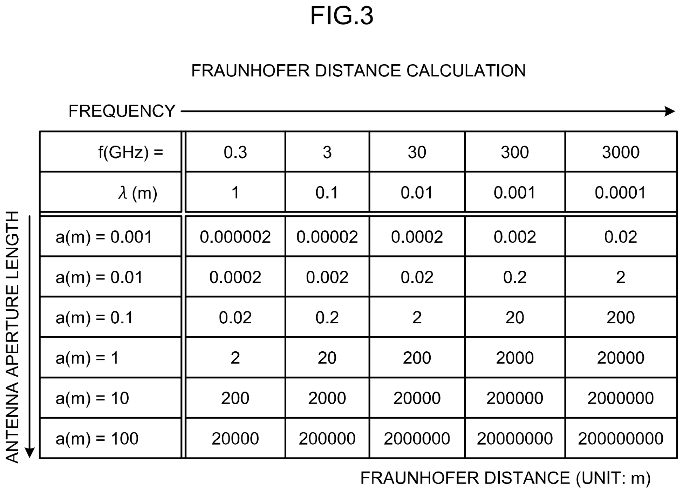

At this time, when a radio wave is transmitted from a single transmission panel having numerous transmission antenna elements, a characteristic of the near field may be considered. FIG. 2 is a diagram illustrating the near field and a far field. Conventionally, it has been assumed that the base station communicates with a remote terminal device such as a smartphone. Therefore, conventionally, studies have been conducted on the premise of the far field as illustrated on the right side of FIG. 2. However, in the future, communication using a larger transmission panel is assumed. Therefore, there is a possibility that communication in consideration of a phase difference that is the characteristic of a near-field region can be performed. The pointforming may be utilized in this near-field region. FIG. 3 is a chart illustrating a Fraunhofer distance that is a boundary between the near field and the far field.

An example of applying the pointforming to the near field has been described above. However, the pointforming can be realized in any environment as long as the phase difference can be considered. Therefore, in an environment where numerous distributed antennas exist around a reception point, it is possible to perform the pointforming regardless of the Fraunhofer distance. Still more, also when a single antenna having numerous antenna elements capable of considering the phase difference at a power concentration point is used, it is possible to perform the pointforming.

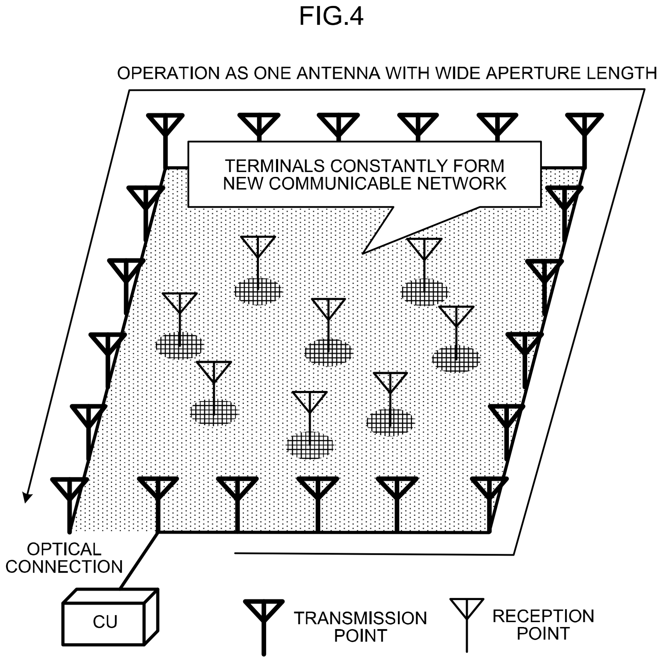

FIG. 4 is a diagram illustrating an example of the pointforming using distributed antennas. In the example in FIG. 4, the base station includes a control unit (central unit (CU) in the example in FIG. 4) that controls a plurality of antennas, and controls the transmission antennas. In the example in FIG. 4, one CU controls the transmission antennas, but the control is no limited to one CU. A plurality of distributed units (DUs) and/or radio access technology (RAT) may operate cooperatively. Still more, in the example in FIG. 4, the CU and the transmission antennas are optically connected, but the optical connection is not necessarily required. Note that each of a plurality of transmission points (transmission antennas) may be one base station. Further, one or a plurality of base stations may control the plurality of transmission points (transmission antennas). Further, the plurality of antennas (plurality of transmission points) may be one or a plurality of transmission panels including the plurality of transmission antennas (antenna elements).

### <1-3. Outline of solution>

Based on the above description, an outline of solution of the present embodiment will be described.

A communication system of the present embodiment includes one or a plurality of base stations and a terminal device. A function of the base station is separated into a plurality of functions such as a central unit (CU), a distributed unit (DU), and a radio unit (RU). The RU includes a plurality of antenna devices and functions as a transmission device that transmits a radio wave to the terminal device. Here, the DU may include the RU.

The base station forms a point cell by the power concentration technique (pointforming). For example, the base station includes a control device that controls a plurality of transmission devices (e.g., RUs). Then, the control device forms a point cell by concentrating power at a specific point by the plurality of transmission devices. For example, the control device forms the point cell by concentrating power at the specific point by the plurality of transmission devices. Note that the base station itself may be regarded as the transmission device. At this time, a plurality of base stations may form the point cell.

In the present embodiment, the plurality of transmission devices is grouped into a plurality of groups based on a predetermined criterion. For example, it is assumed that the transmission device is the RU. At this time, the plurality of RUs may be grouped into the plurality of groups according to a functional split of the base station (e.g., topology of functional split defined by 3GPP (registered trademark)). It is apparent that a method of grouping the transmission devices is not limited to the above. For example, the plurality of transmission devices may be grouped into the plurality of groups according to a processing delay amount based on a physical limitation. Furthermore, the plurality of transmission devices may be dynamically grouped based on information from the terminal device.

In the present embodiment, the terminal device acquires information for identifying a group (hereinafter referred to as group identifying information) used for communication via the point cell (hereinafter referred to as communication via pointforming or simply pointforming). For example, the terminal device may receive a signal from each of two or more groups of transmission devices among the plurality of groups. Then, the terminal device may identify a group to be used for pointforming from the two or more groups based on the strength of the received signal. Alternatively, the terminal device may acquire determination information of a group used for pointforming from the base station as the group identifying information. Then, the terminal device may identify a group used for pointforming based on the group identifying information. The terminal device is connected to the base station via transmission devices of the group identified.

As described above, in the present embodiment, since the transmission devices to be used for pointforming are grouped, the terminal device can efficiently select the transmission devices to be used for pointforming. As a result, since an amount of processing required until the start of data communication is reduced, the communication system can realize pointforming with high communication performance.

The outline of the present embodiment has been described above, and a communication system 1 according to the present embodiment will be described in detail below.

### <<2. Configuration of communication system>>

Hereinafter, a configuration of the communication system 1 will be specifically described with reference to the drawings.

### <2-1. Network configuration example>

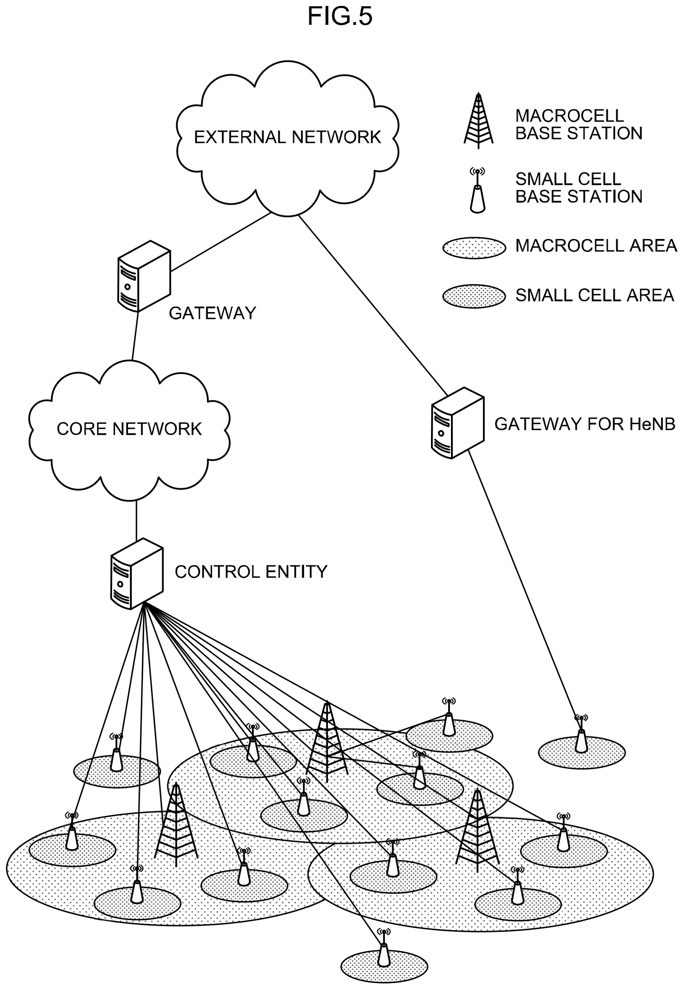

FIG. 5 is a diagram illustrating a network configuration that can be adopted by the communication system 1 of the present embodiment. A line (broken line) in the drawing signifies logical connection, and is not necessarily directly connected physically. A communication area is configured with "cells" (ellipses in the drawing) provided by a plurality of base stations. A plurality of cells may be provided by one base station.

The base stations can communicate with each other via backhaul (wired or wireless), and mainly exchange control information. As communication using the backhaul, communication using a protocol of an X2 interface or an S1 interface is assumed.

Each of the base stations also has the backhaul with a core network of the system. At that time, the base station may be connected to the core network by being connected to a control entity (the control entity may be regarded as one element of the core network). Further, the base station may be connected to the core network via an external network in addition to the control entity. Examples of the base station to be connected include a femto cell base station device or an HeNB device that can be installed indoors and at home.

Similarly, when a function of the base station is divided and base stations are defined as separate units, these units may have a midhaul between the units. These units may be connected to the core network by being individually connected to the control entity or the core network. In addition, these units may be connected to the control entity or the core network by relaying between the same or different types of units generated by the functional split.

The function of the base station may be divided in separate forms on a user plane and a control plane.

When the function of the base station is divided, and base stations are defined as separate units, the units may be shared by a same or separate base stations or devices or entities that configure a macro cell or micro cell.

When the function of the base station is divided, and base stations are defined as separate units, these units do not necessarily need to be physically separated. These units may be defined by virtual or logical separation.

The midhaul may be physically or logically established. At this time, the midhaul may be configured with a dedicated communication path or a general public network. Alternatively, the midhaul may be established via a wireless device. Still more, the midhaul and the backhaul may overlap.

Further, a device or a base station configuring the macro cell or the micro cell may have a fronthaul between a unit including at least a radio frequency (RF) device or an antenna device and other functions or devices. At this time, the fronthaul allows any connection regardless of physical, logical, wireless, wired, dedicated line, and general network.

A device configuring a small cell or a femto cell may be configured with a unit including at least the RF device or the antenna device. These units may be shared by one or more base stations or other devices with similar functions.

A small cell area is basically arranged so as to overlap with a macro cell area. However, the small cell area may be arranged partially or completely outside the macro cell area.

A device configuring the macro cell, a device configuring the small cell, or a device having the base station function may characterize a radio resource to be used. For example, the macro cell and the small cell may use the same frequency resource F1 (or time resource T1). In this way, it is possible to improve a radio resource utilization efficiency of the entire system. On the other hand, the macro cell may use the frequency resource F1 (or time resource T1), and the small cell may use a frequency F2 (or time resource T2). In this way, interference between the macro cell and the small cell can be avoided. Further, both types of cells or devices having the base station function may use F1/2 (T1/2). This is an idea equivalent to carrier aggregation (CA) when applied to frequency resources.

A device having the macro cell and the small cell or the base station function may characterize a radio resource itself to be used or a superimposition method thereof on the premise that the macro cell, the small cell and the device having the base station function are spatially separated. Examples include multi input multi output (MIMO) and spatial division multiplex by beamforming.

The macro cell and the small cell may include a plurality of transmission and reception points or a plurality of radio wave transmission and reception units. In communication using the plurality of transmission and reception points or the plurality of radio wave transmission and reception units, the plurality of transmission and reception points and the plurality of radio wave transmission and reception units may use different resources (frequency, time) at the time of transmission and reception, or may use the same resource. The plurality of transmission and reception points and the plurality of radio wave transmission and reception units may be shared and used by different cells.

### <2-2. Functional configuration example of communication system>

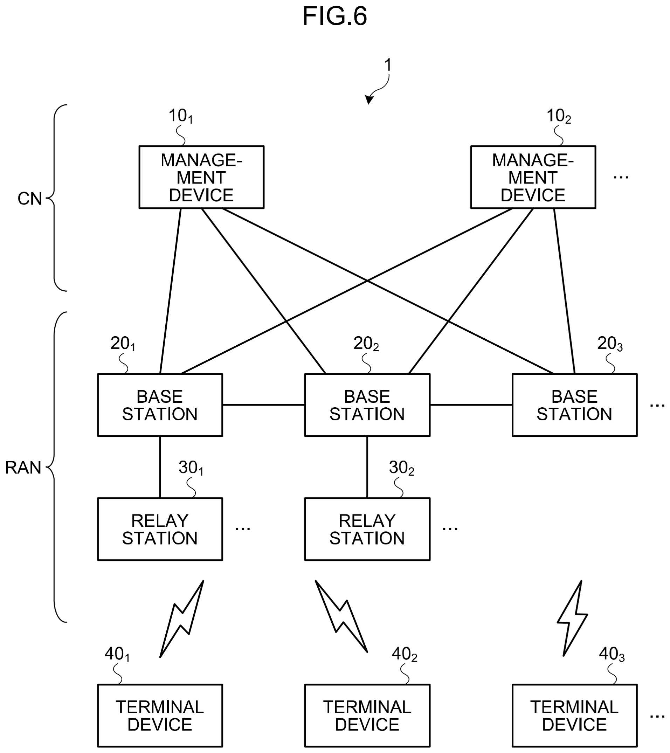

FIG. 6 is a diagram illustrating a functional configuration example of the communication system 1 according to the embodiment of the present disclosure. The communication system 1 includes a management device 10, a base station 20, a relay station 30, and a terminal device 40. The communication system 1 provides a user with a wireless network capable of mobile communication by coordinated operation of wireless communication apparatuses configuring the communication system 1. The wireless network of the present embodiment includes a radio access network RAN and a core network CN. Note that, in the present embodiment, the wireless communication apparatus is an apparatus having a function of wireless communication, and corresponds to the base station 20, the relay station 30, and the terminal device 40 in the example in FIG. 6.

The communication system 1 may include a plurality of management devices 10, a plurality of base stations 20, a plurality of relay stations 30, and a plurality of terminal devices 40. In the example in FIG. 6, the communication system 1 includes management devices 10₁ and 10₂ as the management device 10, and includes base stations 20₁, 20₂, and 20₃ as the base station 20. Furthermore, the communication system 1 includes relay stations 30₁ and 30₂ as the relay station 30, and includes terminal devices 40₁, 40₂, and 40₃ as the terminal device 40.

The terminal device 40 may be configured to connect to a network using a radio access technology (RAT) such as long term evolution (LTE), new radio (NR), 6G, Wi-Fi, and Bluetooth (registered trademark). In this case, the terminal device 40 may be configured to be able to use different radio access technologies (wireless communication systems). For example, the terminal device 40 may be configured to be able to use the NR and the Wi-Fi. Furthermore, the terminal device 40 may be configured to be able to use different cellular communication technologies (e.g., LTE, NR, or 6G). The LTE and NR are types of cellular communication technology, and enable mobile communication of a terminal device by arranging a plurality of cellular areas covered by the base station. In addition, the 6G is also a type of cellular communication technology, and enables mobile communication of the terminal device by arranging a plurality of cellular areas covered by the base station.

Note that, in the following description, the "LTE" includes LTE-Advanced (LTE-A), LTE-Advanced Pro (LTE-A Pro), and evolved universal terrestrial radio access (EUTRA). Still more, the NR includes new radio access technology (NRAT) and further EUTRA (FEUTRA). Note that a single base station 20 may manage a plurality of cells. In the following description, a cell corresponding to the LTE is referred to as an LTE cell, and a cell corresponding to the NR is referred to as an NR cell.

The NR is the radio access technology of a next generation (fifth generation) of the LTE (fourth generation communication including LTE-Advanced and LTE-Advanced Pro). The NR is the radio access technology that can support various use cases including enhanced mobile broadband (eMBB), massive machine type communications (mMTC), and ultra-reliable and low latency communications (URLLC). NR is standardized by Rel-15 of 3GPP (registered trademark) as a technical framework corresponding to a usage scenario, a requirement condition, an arrangement scenario, and the like in these use cases. Furthermore, in Beyond 5G and 6G, it is required to simultaneously realize a plurality of axes of high speed and large capacity, low delay and high reliability, and multiple simultaneous connection.

6G is a cellular communication technology of a next generation of the NR or a 5G system (5GS) which is fifth generation mobile communication, and includes the radio access technology and the network technology between the base station, the core network, and a data network. 6G may include advanced (extreme connectivity) of each of eMBB, mMTC, and URLLC, which are main use cases or required conditions in the NR, and new technologies in new aspects. As new technologies, for example, artificial intelligence (cognitive network and AI native air interface), sensing (rader sensing and network as a sensor), and terahertz communication are assumed.

Note that the wireless network may support the radio access technology (RAT) such as the long term evolution (LTE), the new radio (NR), and 6G. The LTE, NR, and 6G are types of cellular communication technology, and enable mobile communication of the terminal device by arranging a plurality of cellular areas covered by the base station. Note that a radio access system used by the communication system 1 is not limited to the LTE, NR, and 6G, and may be another radio access method such as wideband code division multiple access (W-CDMA) or code division multiple access 2000 (cdma 2000).

Furthermore, the base station 20 and the relay station 30 may be a ground station or a non-ground station. The non-ground station may be a satellite station or an aircraft station. When the non-ground station is a satellite station, the wireless network may be a bent-pipe (transparent) type mobile satellite communication system.

In the present embodiment, the ground station and the ground base station refer to a base station and a relay station installed on the ground. Here, the "ground" is a ground in a broad sense including not only land but also underground, on water, and underwater. Note that, in the following description, the "ground station" may be replaced with a "gateway".

Note that an LTE base station may be referred to as an evolved node B (eNodeB) or an eNB. Further, an NR base station may be referred to as a gNodeB or a gNB. Further, a 6G base station may be referred to as a 6G NodeB (6GNB). In the LTE, NR, and 6G, the terminal device (also referred to as a mobile station or a terminal) may be referred to as user equipment (UE). Note that the terminal device is a type of communication apparatus, and is also referred to as a mobile station or a terminal.

Note that the terminal device 40 may be connectable to a network using the radio access technology (wireless communication system) other than the LTE, NR, 6G, Wi-Fi, and Bluetooth. For example, the terminal device 40 may be connectable to a network by using low power wide area (LPWA) communication. Furthermore, the terminal device 40 may be connectable to the network using wireless communication of a unique standard.

Here, the LPWA communication is the wireless communication that enables low-power wide-area communication. For example, the LPWA radio is Internet of Things (IoT) wireless communication using a specified low power radio (e.g., 920 MHz band) or an industry-science-medical (ISM) band. Note that the LPWA communication used by the terminal device 40 may conform to the LPWA standards. Examples of the LPWA standards include ELTRES, ZETA, SIGFOX, LoRaWAN, and NB-Iot. It is apparent that the LPWA standards are not limited thereto, and may be other LPWA standards.

Each wireless communication apparatus in FIG. 6 may be considered as an apparatus in a logical sense. In other words, a part of each wireless communication apparatus may be realized by a virtual machine (VM), a container, a docker, or the like, and they may be implemented on physically the same hardware.

In the present embodiment, the concept of the wireless communication apparatus includes not only a portable mobile device (terminal device) such as a mobile terminal but also a device installed in a structure or a mobile body. The structure or the mobile body itself may be regarded as a wireless communication apparatus. In addition, the concept of the wireless communication apparatus also includes the base station 20 and the relay station 30 in addition to the terminal device 40. The wireless communication apparatus is a type of processing apparatus or information processor. The wireless communication apparatus can also be referred to as a transmission device or a reception device.

Hereinafter, the configuration of wireless communication apparatuses included in the communication system 1 will be specifically described. Note that the configuration of each wireless communication apparatus described below is merely an example. The configuration of each wireless communication apparatus may be different from the following configuration.

### <2-3. Configuration of management device>

The management device 10 is an information processor (computer) that manages the wireless network. For example, the management device 10 is an information processor that manages communication of the base station 20. The management device 10 may be, for example, a device having a function as a mobility management entity (MME). The management device 10 may be a device having a function as an access and mobility management function (AMF) and/or a session management function (SMF). The MME, the AMF, and the SMF are control plane network function nodes in the core network. The management device 10 may be a device having a function as a control plane network function in 6G (6G CPNF). The 6G CPNF may be configured with one or more logical nodes.

Obviously, functions of the management device 10 are not limited to the MME, the AMF, the SMF, and the 6G CPNF. The management device 10 may be a device having a function as a network slice selection function (NSSF), an authentication server function (AUSF), a policy control function (PCF), or a unified data management (UDM). Furthermore, the management device 10 may be a device having a function as a home subscriber server (HSS).

Note that the management device 10 may have a function of the gateway. For example, the management device 10 may have a function as a serving gateway (S-GW) or a packet data network gateway (P-GW). In addition, the management device 10 may have a function of the user plane function (UPF). In this case, the management device 10 may have a plurality of UPFs. Furthermore, the management device 10 may be a device having a function as a user plane network function in 6G (6G UPNF).

The core network includes a plurality of network functions, and each network function may be aggregated into one physical device or distributed to a plurality of physical devices. In other words, the management device 10 can be dispersedly arranged in a plurality of devices. Further, this distributed arrangement may be controlled to be performed dynamically. The base station 20 and the management device 10 configure one network, and provide a wireless communication service to the terminal device 40. The management device 10 is connected to the Internet, and the terminal device 40 can use various services provided via the Internet via the base station 20.

Note that the management device 10 is not necessarily a device configuring the core network. For example, it is assumed that the core network is a wideband code division multiple access (W-CDMA) or code division multiple access 2000 (cdma 2000) core network. In this case, the management device 10 may be a device that functions as a radio network controller (RNC).

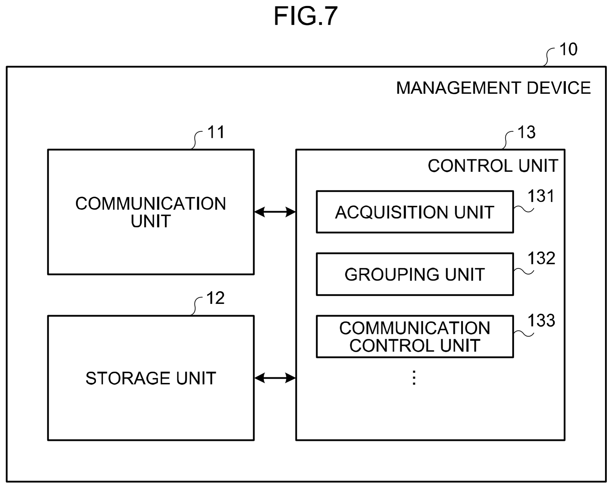

FIG. 7 is a diagram illustrating a configuration of the management device 10 according to the present embodiment. The management device 10 includes a communication unit 11, a storage unit 12, and a control unit 13. However, the configuration illustrated in FIG. 7 is a functional configuration, and the hardware configuration may be different from the functional configuration. Furthermore, functions of the management device 10 may be implemented in a statistically or dynamically distributed manner in a plurality of physically separated structures. The management device 10 may include a plurality of server devices.

The communication unit 11 is a communication interface for communicating with the wireless communication apparatus (e.g., the base station 20 or the relay station 30). The communication unit 11 may be a network interface or a device connection interface. For example, the communication unit 11 may be a local area network (LAN) interface such as a network interface card (NIC), or may be a universal serial bus (USB) interface including a USB host controller and a USB port. The communication unit 11 may be a wired interface or a wireless interface. The communication unit 11 functions as a communication means of the management device 10. The communication unit 11 is controlled by the control unit 13.

The storage unit 12 is a storage device capable of reading and writing data, such as a dynamic random access memory (DRAM), a static random access memory (SRAM), a flash memory, or a hard disk. The storage unit 12 functions as a storage means of the management device 10. The storage unit 12 stores, for example, a connection state of the terminal device 40. The storage unit 12 stores a radio resource control (RRC) state and a state of an EPS connection management (ECM) or a 5G system connection management (CM) of the terminal device 40. The storage unit 12 may function as a home memory that stores position information of the terminal device 40.

The control unit 13 is a controller that controls each part of the management device 10. The control unit 13 is realized by, for example, a processor such as a central processing unit (CPU) or a micro processing unit (MPU). Specifically, the control unit 13 may be realized by a processor executing various programs stored in a storage device inside the management device 10 using a random access memory (RAM) or the like as a work area. The control unit 13 may be realized by an integrated circuit such as an application specific integrated circuit (ASIC) or a field programmable gate array (FPGA). Furthermore, the control unit 13 may be realized by a graphics processing unit (GPU). Any of the CPU, the MPU, the ASIC, the FPGA, and the GPU can be regarded as the controller. Note that the control unit 13 may include a plurality of physically separated objects. For example, the control unit 13 may include a plurality of semiconductor chips.

The control unit 13 includes an acquisition unit 131, a grouping unit 132, and a communication control unit 133. Each block (acquisition unit 131 to communication control unit 133) configuring the control unit 13 is a functional block indicating each function of the control unit 13. These functional blocks may be software blocks or hardware blocks. For example, each of the functional blocks described above may be one software module realized by software (including a microprogram), or may be one circuit block on a semiconductor chip (die). It is apparent that each functional block may be one processor or one integrated circuit. The control unit 13 may be configured by a functional unit different from the above-described functional blocks. A configuration method of the functional blocks is arbitrary. Note that the operation of each block (the acquisition unit 131 to the communication control unit 133) configuring the control unit 13 may be the same as the operation of each block included in the control unit 23 of the base station 20, the control unit 33 of the relay station 30, or the control unit 43 of the terminal device 40.

### <2-4. Configuration of base station>

The base station 20 is a wireless communication apparatus that performs wireless communication with another wireless communication apparatus (e.g., the relay station 30, the terminal device 40, or another base station 20). The base station 20 may wirelessly communicate with the terminal device 40 via the relay station 30, or may directly wirelessly communicate with the terminal device 40.

The base station 20 is a device corresponding to a radio base station (base station, Node B, eNB, gNB, 6GNB, or the like) or a radio access point. The base station 20 may be a wireless relay station. The base station 20 may be an optical extended device called a remote radio head (RRH). Furthermore, the base station 20 may be a receiving station such as a field pickup unit (FPU). Furthermore, the base station 20 may be an integrated access and backhaul (IAB) donor node or an IAB relay node that provides a radio access line and a radio backhaul line by time division multiplex, frequency division multiplex, or spatial division multiplex.

The radio access technology used by the base station 20 may be a cellular communication technology. The radio access technology used by the base station 20 may be a wireless LAN technology. The radio access technology used by the base station 20 may be a low power wide area (LPWA) communication technology. However, the radio access technology used by the base station 20 is not limited thereto, and may be another radio access technology. The wireless communication used by the base station 20 may be wireless communication using a millimeter wave or wireless communication using a terahertz wave. Furthermore, the wireless communication used by the base station 20 may be wireless communication using radio waves or wireless communication (optical) using infrared rays or visible light. The base station 20 may be capable of non-orthogonal multiple access (NOMA) communication with the terminal device 40. Here, the NOMA communication is communication using a non-orthogonal resource (transmission, reception, or both). Note that the base station 20 may be able to perform the NOMA communication with another base station 20.

Note that the base stations 20 may be capable of communicating with each other via a base station-core network interface (e.g., NG Interface and S1 Interface). This interface may be either wired or wireless. Furthermore, the base stations may be capable of communicating with each other via the inter-base station interface (e.g., Xn interface, X2 interface, or F1 interface). This interface may be either wired or wireless.

The concept of the base station (also referred to as a "base station device") includes not only a donor base station but also a relay base station (also referred to as a "relay station"). The relay base station may be any one of RF repeater, smart repeater, and intelligent surface. The concept of the base station also includes a device installed in the structure in addition to a structure having a function of the base station.

The structure is, for example, a building such as a high-rise building, a house, a steel tower, a station facility, an airport facility, a harbor facility, an office building, a school building, a hospital, a factory, a commercial facility, or a stadium. The concept of the structure also includes a construction (non-building structure) such as a tunnel, a bridge, a dam, a wall, and an iron pillar, and equipment such as a crane, a gate, and a windmill in addition to buildings. The concept of the structure also includes a structure on water such as a platform or a megafloat, and a structure under water such as an ocean observation facility in addition to the structure on land (on the ground in a narrow sense) or underground. The base station can also be rephrased as the information processor.

The base station 20 may be a donor station or a relay station. Furthermore, the base station 20 may be a fixed station or a mobile station. The mobile station is a wireless communication apparatus (e.g., base station) configured to be movable. In this case, the base station 20 may be a device installed in the mobile body or may be the mobile body itself. For example, the relay station having mobility can be regarded as the base station 20 as the mobile station. In addition, a device that is originally a device having the mobility and has a function of the base station (at least a part of the function of the base station), such as a vehicle, an unmanned aerial vehicle (UAV) as typified by a drone, or a smartphone, also corresponds to the base station 20 as the mobile station.

Here, the mobile body may be a mobile terminal such as a smartphone or a mobile phone. The mobile body may be a mobile body (e.g., vehicle including an automobile, a bicycle, a bus, a truck, a motorcycle, a train, or a linear motor car) that travels on land (on the ground in a narrow sense) or a mobile body (e.g., subway) that travels underground (e.g., inside tunnel). In addition, the mobile body may be a mobile body that travels on water (e.g., ship such as a passenger ship, a cargo ship, or a hovercraft) or a mobile body that moves under water (e.g., submersibles such as a submersible vessel, a submarine, or an unmanned submarine). Still more, the mobile body may be a mobile body that moves in the atmosphere (e.g., aircraft such as an airplane, an airship, or a drone).

The base station 20 may be a ground base station (ground station) installed on the ground. The base station 20 may also be a base station installed in a structure on the ground, or may be a base station installed in a mobile body moving on the ground. The base station 20 may also be an antenna installed in a structure such as a building and a signal processing device connected to the antenna. The base station 20 may also be the structure or the mobile body itself. The "ground" is a ground in a broad sense including not only land (on the ground in a narrow sense) but also underground, on water, and underwater. The base station 20 is not limited to the ground base station. When the communication system 1 is a satellite communication system, the base station 20 may be an aircraft station. From the perspective of the satellite station, the aircraft station located on the earth is a ground station.

The base station 20 is not limited to the ground station. The base station 20 may be a non-ground base station device (non-ground station) capable of floating in the air or space. For example, the base station 20 may be an aircraft station or a satellite station.

The satellite station is a satellite station capable of floating outside the atmosphere. The satellite station may be a device mounted on a space mobile body such as an artificial satellite, or may be the space mobile body itself. The space mobile body is a mobile body that moves outside the atmosphere. Examples of the space mobile body include artificial bodies such as an artificial satellite, a spacecraft, a space station, and a probe. The satellite serving as the satellite station may be any of a low earth orbiting (LEO) satellite, a medium earth orbiting (MEO) satellite, a geostationary earth orbiting (GEO) satellite, or a highly elliptical orbiting (HEO) satellite. The satellite station may be a device mounted on the low earth orbiting satellite, the middle earth orbiting satellite, the geostationary earth orbiting satellite, or the high elliptical orbiting satellite.

The aircraft station is a wireless communication apparatus capable of floating in the atmosphere, such as an aircraft. The aircraft station may be a device mounted on an aircraft or the like, or may be the aircraft itself. The concept of the aircraft includes not only heavy aircraft such as airplanes or gliders, but also light aircraft such as balloons or airships. The concept of the aircraft also includes not only heavy or light aircraft, but also rotorcraft such as helicopters or autogyros. The aircraft station or the aircraft on which the aircraft station is mounted may be an unmanned aerial vehicle such as a drone.

The concept of the unmanned aerial vehicle includes an unmanned aircraft system (UAS) and a tethered UAS. The concept of the unmanned aerial vehicle also includes lighter than air (LTA) UAS and heavier than air (HTA) UAS. The concept of the unmanned aerial vehicle also includes high altitude UAS platforms (HAPs).

The coverage of the base station 20 may be relatively large such as a macro cell or may be relatively small such as a pico cell. A magnitude of the coverage of the base station 20 may be extremely small such as a femto cell. The base station 20 may have a beamforming function. At this time, in the base station 20, a cell or a service area may be formed for each beam. Furthermore, the base station 20 may have a pointforming function. The pointforming is a technique of concentrating power (power concentration technique) at the specific point, using the phase difference of the near field. At this time, in the base station 20, the cell or the service area may be formed for each point.

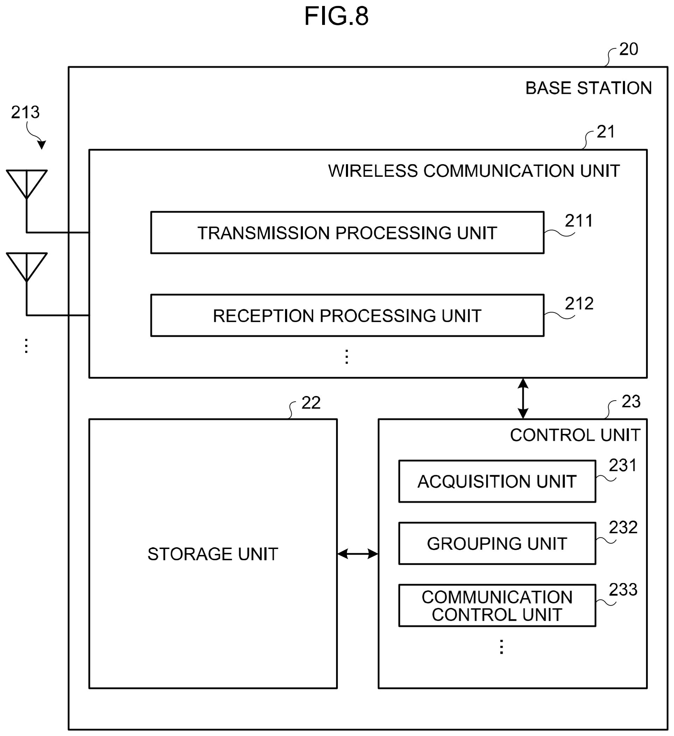

FIG. 8 is a diagram illustrating a configuration of the base station 20 according to the present embodiment. The base station 20 includes a wireless communication unit 21, a storage unit 22, and a control unit 23. However, the configuration illustrated in FIG. 8 is a functional configuration, and a hardware configuration may be different from the functional configuration. Furthermore, functions of the base station 20 may be implemented in a distributed manner in a plurality of physically separated configurations.

The wireless communication unit 21 is a signal processing unit for wirelessly communicating with other wireless communication apparatuses (e.g., the relay station 30, the terminal device 40, or another base station 20). The wireless communication unit 21 is controlled by the control unit 23. The wireless communication unit 21 corresponds to one or a plurality of radio access systems. The wireless communication unit 21 may support at least one of the NR, LTE, and 6G. The wireless communication unit 21 may support W-CDMA, cdma 2000, and the like in addition to the NR, LTE, and 6G. The wireless communication unit 21 may also support an automatic retransmission technology such as a hybrid automatic repeat request (HARQ).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. When the wireless communication unit 21 supports a plurality of radio access systems, each part of the wireless communication unit 21 can be configured individually for each of the radio access systems. The transmission processing unit 211 and the reception processing unit 212 may be individually configured by the LTE, NR, and 6G. The transmission processing unit 211 and the reception processing unit 212 may be individually configured by a cellular communication system and another communication system (e.g., Wi-Fi or Bluetooth). The antenna 213 may include a plurality of antenna elements, for example, a plurality of patch antennas. The wireless communication unit 21 may have the beamforming function. For example, the wireless communication unit 21 may have a polarization beamforming function (or a polarization beamforming function using dual-polarized waves in polarization directions at 45 degrees and -45 degrees from the vertical direction) using vertically polarized waves (V-polarized waves) and horizontally polarized waves (H-polarized waves). Furthermore, the wireless communication unit 21 may have the pointforming function.

The transmission processing unit 211 performs transmission processing of downlink control information and downlink data. The transmission processing unit 211 encodes the downlink control information and the downlink data input from the control unit 23 using an encoding system such as block encoding, convolutional encoding, or turbo encoding. Here, the encoding may be performed by polar code encoding or low density parity check code (LDPC code) encoding. Then, the transmission processing unit 211 modulates coded bits by a predetermined modulation scheme such as BPSK, QPSK, 16QAM, 64QAM, or 256QAM. In this case, signal points on constellation do not necessarily have to be equidistant. The constellation may be a non-uniform constellation (NUC). The transmission processing unit 211 multiplexes a modulation symbol of each channel and a downlink reference signal, and arranges a multiplexed result in a predetermined resource element. Then, the transmission processing unit 211 performs various types of signal processing on a multiplexed signal. For example, the transmission processing unit 211 performs processing such as conversion into a frequency domain by fast Fourier transform, addition of a guard interval, generation of a baseband digital signal, conversion into an analog signal, quadrature modulation, up-conversion, removal of an extra frequency component, and power amplification. A signal generated by the transmission processing unit 211 is transmitted from the antenna 213.

The reception processing unit 212 processes an uplink signal received via the antenna 213. The reception processing unit 212 performs, with respect to the uplink signal, down-conversion, removal of an unnecessary frequency component, control of an amplification level, quadrature demodulation, conversion into a digital signal, removal of a guard interval (cyclic prefix), extraction of a frequency domain signal by fast Fourier transform, and the like. In this case, the reception processing unit 212 separates an uplink channel, such as a physical uplink shared channel (PUSCH) and a physical uplink control channel (PUCCH), and an uplink reference signal from a signal after the above processing is performed. The reception processing unit 212 demodulates a received signal using a modulation scheme such as binary phase shift keying (BPSK) or quadrature phase shift keying (QPSK) with respect to a modulation symbol of the uplink channel. The modulation scheme used for demodulation may be 16-quadrature amplitude modulation (16QAM), 64QAM, or 256QAM. In this case, signal points on constellation do not necessarily have to be equidistant. The constellation may be a non-uniform constellation (NUC). The reception processing unit 212 decodes encoded bits of a demodulated uplink channel. Decoded uplink data and uplink control information are output to the control unit 23.

The antenna 213 is an antenna device that mutually converts a current and a radio wave. The antenna 213 may be configured by one antenna element, for example, one patch antenna. The antenna 213 may include a plurality of antenna elements, for example, a plurality of patch antennas. In a case where the antenna 213 includes a plurality of antenna elements, the wireless communication unit 21 may have the beamforming function. At this time, the wireless communication unit 21 may be configured to generate a directional beam by controlling the directivity of the wireless signal using the plurality of antenna elements. Furthermore, when the antenna 213 includes a plurality of antenna elements, the wireless communication unit 21 may have the pointforming function. At this time, the wireless communication unit 21 may be configured to form a dotted cell by cooperatively controlling the plurality of antenna elements.

Note that the antenna 213 may be a dual-polarized antenna. When the antenna 213 is the dual-polarized antenna, the wireless communication unit 21 may use vertically polarized waves (V-polarized waves) and horizontally polarized waves (H-polarized waves) (or dual-polarized waves in polarization directions at 45 degrees and -45 degrees from the vertical direction) when transmitting a wireless signal. The wireless communication unit 21 may control the directivity of the radio signal transmitted using the vertically polarized waves and the horizontally polarized waves (or dual-polarized waves in the polarization directions at 45 degrees and -45 degrees from the vertical direction). Furthermore, the wireless communication unit 21 may transmit and receive spatially multiplexed signals via a plurality of layers including the plurality of antenna elements.

The storage unit 22 is a storage device capable of reading and writing data, such as a DRAM, an SRAM, a flash memory, or a hard disk.

The control unit 23 is a controller that controls each unit of the base station 20. The control unit 23 controls the wireless communication unit to perform wireless communication with another wireless communication apparatus (e.g., the relay station 30, the terminal device 40, or another base station 20). The control unit 23 may be realized by a processor such as a CPU or an MPU. Specifically, the control unit 23 may be implemented by a processor executing various programs stored in a storage device inside the base station 20 using a RAM or the like as a work area. The control unit 23 may be realized by an integrated circuit such as the ASIC or the FPGA. Furthermore, the control unit 23 may be realized by the GPU. Any of the CPU, the MPU, the ASIC, the FPGA, and the GPU can be regarded as the controller. Note that the control unit 23 may include a plurality of physically separated objects. For example, the control unit 23 may include a plurality of semiconductor chips.

The control unit 23 includes an acquisition unit 231, a grouping unit 232, and a communication control unit 233. Each block (acquisition unit 231 to communication control unit 233) configuring the control unit 23 is a functional block indicating each function of the control unit 23. These functional blocks may be software blocks or hardware blocks. For example, each of the functional blocks described above may be one software module realized by software (including a microprogram), or may be one circuit block on a semiconductor chip (die). It is apparent that each functional block may be one processor or one integrated circuit. Note that the control unit 23 may be configured by a functional unit different from the above-described functional blocks. A configuration method of the functional blocks is arbitrary. Note that the operation of each block (the acquisition unit 231 to the communication control unit 233) configuring the control unit 23 may be the same as the operation of each block included in the control unit 13 of the management device 10, the control unit 33 of the relay station 30, or the control unit 43 of the terminal device 40.

Note that, in some embodiments, the base station 20 may be configured by a set of a plurality of physical or logical devices. As an example, the base station 20 in this embodiment may be distinguished into a plurality of devices such as a baseband unit (BBU) and a radio unit (RU). The base station 20 may be interpreted as a set of these plurality of devices. In addition, the base station may be either or both of the BBU and the RU. The BBU and the RU may be connected by a predetermined interface, for example, an enhanced common public radio interface (eCPRI).

The RU may be rephrased as a remote radio unit (RRU) or a radio DoT (RD). The RU may correspond to a gNB distributed unit (gNB-DU) described later. The BBU may correspond to a gNB central unit (gNB-CU) described later. The RU may be a device integrally formed with the antenna. The antenna of the base station 20, for example, an antenna integrally formed with the RU, may adopt an advanced antenna system and support MIMO, such as FD-MIMO, or beamforming. In addition, the antenna of the base station 20 may support pointforming. The antenna of the base station 20 may include, for example, 64 transmission antenna ports and 64 reception antenna ports.

The antenna mounted on the RU may be an antenna panel configured with one or more antenna elements, and the RU may be equipped with one or more antenna panels. The RU may be equipped with two types of antenna panels, i.e., a horizontally polarized antenna panel and a vertically polarized antenna panel. The RU may be equipped with two types of antenna panels, i.e., a right-handed circularly polarized antenna panel and a left-handed circularly polarized antenna panel, or an antenna panel with a polarization direction of 45 degrees from the vertical direction and an antenna panel with a polarization direction of -45 degrees from the vertical direction. A plurality of antennas having the plurality of polarization directions may be mounted on one antenna panel. The RU may be controlled by forming an independent beam for each antenna panel.

A plurality of the base stations 20 may be connected to each other. One or more base stations 20 may be included in a radio access network (RAN). At this time, the base station 20 may be simply referred to as a RAN, a RAN node, an access network (AN), an AN node, or the like. The RAN in the LTE may be referred to as an enhanced universal terrestrial RAN (EUTRAN). The RAN in the NR may be referred to as NGRAN. In addition, the RAN in the 6G may be referred to as 6GRAN. The RAN in the W-CDMA (UMTS) may be referred to as UTRAN.

The base station 20 of the LTE may be referred to as evolved node B (eNodeB) or eNB. At this time, the EUTRAN includes one or more eNodeBs (eNBs). The base station 20 of the NR may be referred to as gNodeB or gNB. At this time, the NGRAN includes one or more gNBs. The 6G base station may be referred to as 6GNodeB, 6gNodeB, 6GNB, or 6gNB. At this time, the 6GRAN includes one or more 6GNBs. The EUTRAN may include the gNB (en-gNB) connected to the core network (EPC) in the LTE communication system (EPS). The NGRAN may include the ng-eNB connected to the core network 5GC in the 5G communications system (5GS).

When the base station 20 is the eNB, the gNB, the 6GNB, or the like, the base station 20 may be referred to as a 3GPP access. When the base station 20 is the radio access point, the base station 20 may be referred to as a non-3GPP access. The base station 20 may be an optical extended device called a remote radio head (RRH). When the base station 20 is the gNB, the base station 20 may be a combination of the gNB-CU and the gNB-DU described above, or may be either the gNB-CU or the gNB-DU.

Here, the gNB-CU hosts a plurality of upper layers (e.g., radio resource control (RRC), service data adaptation protocol (SDAP), and packet data convergence protocol (PDCP)) in an access stratum for communication with the UE. On the other hand, the gNB-DU hosts a plurality of lower layers (e.g., radio link control (RLC), medium access control (MAC), and physical layer (PHY) in an access stratum. In other words, among messages/information to be described later, RRC signaling (semi-static notification) may be generated by the gNB-CU, while MAC CE and DCI (dynamic notification) may be generated by the gNB-DU. Alternatively, in the RRC configuration (semi-static notification), for example, some configurations such as IE: cellGroupConfig may be generated by the gNB-DU, and the remaining configurations may be generated by the gNB-CU. These configurations may be transmitted and received through an F1 interface.

The base station 20 may be configured to be able to communicate with other base stations. When the plurality of base stations 20 is the eNBs or a combination of the eNB and the en-gNB, these base stations 20 may be connected by an X2 interface. When the plurality of base stations 20 is the gNBs or a combination of the gn-eNB and the gNB, these base stations 20 may be connected by an Xn interface. When the plurality of base stations 20 is a combination of the gNB-CU and the gNB-DU, these base stations 20 may be connected by the F1 interface. A message/information (e.g., RRC signaling, MAC control element (MAC CE), or downlink control information (DCI)) described later may be transmitted between the plurality of base stations 20 via, for example, the X2 interface, the Xn interface, or the F1 interface.

The cell provided by the base station 20 may be referred to as a serving cell. The serving cell may include a primary cell (PCell) and a secondary cell (SCell). When dual connectivity is provided to the terminal device 40, the PCell provided by a master node (MN) and zero or one or more SCells may be referred to as a master cell group. Examples of the dual connectivity include EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity. Further, examples of dual connectivity include NR-6G dual connectivity and 6G-NR dual connectivity.

The serving cell may include a primary secondary cell (PSCell) or a primary SCG cell. When the dual connectivity is provided to the terminal device 40, the PSCell provided by a secondary node (SN) and zero or one or more SCells may be referred to as a secondary cell group (SCG). Unless specifically configured (e.g., PUCCH on SCell), a physical uplink control channel (PUCCH) is transmitted by the PCell and the PSCell but not by the SCell. A radio link failure is detected by the PCell and the PSCell, but is not detected by the SCell (no need to detect). As described above, since the PCell and the PSCell play a special role in the serving cell, they are also referred to as a special cell (SpCell).

In one cell, one downlink component carrier and one uplink component carrier may be associated. A system bandwidth corresponding to one cell may be divided into a plurality of bandwidth parts (BWPs). At this time, one or more BWPs may be set in the terminal device 40, and one BWP may be used as an active BWP for the terminal device 40. A radio resource that can be used by the terminal device 40, for example, a frequency band, a numerology (subcarrier spacing), or a slot configuration, may be different for each cell, each component carrier, or each BWP.

### <2-5. Configuration of relay station>

The relay station 30 is a wireless communication apparatus serving as a relay of the base station 20. The relay station 30 is one type of base station. The relay station 30 is one type of information processor. The relay station 30 can be rephrased as a relay base station. Note that the relay station 30 may be a device called a repeater (e.g., RF repeater, smart repeater, intelligent surface). The relay station 30 is a wireless communication apparatus that performs wireless communication with another wireless communication apparatus (e.g., the base station 20, another relay station 30, or the terminal device 40).

The relay station 30 may be able to perform the NOMA communication with the terminal device 40. The relay station 30 relays communication between the base station 20 and the terminal device 40. The relay station 30 may be able to perform wireless communication with another relay station 30 and the base station 20. The relay station 30 may be a ground station device or a non-ground station device. The relay station 30 configures a radio access network RAN together with the base station 20.

The relay station 30 may be a fixed device, a movable device, or a floating device. The magnitude of the coverage of the relay station 30 is not limited to a specific size. The cell covered by the relay station 30 may be the macro cell, the micro cell, or the small cell.

The relay station 30 is not limited to a mounted device as long as a function of relay is satisfied. The relay station 30 may be mounted on a terminal device such as a smartphone, may be mounted on an automobile, a train, a human-powered vehicle, or the like, may be mounted on a balloon, an airplane, a drone, or the like, or may be mounted on a home appliance such as a television, a game machine, an air conditioner, a refrigerator, or a lighting fixture.

A configuration of the relay station 30 may be similar to the configuration of the base station 20 described above. Similarly to the base station 20 described above, the relay station 30 may be a device installed in a mobile body or may be the mobile body itself. As described above, the mobile body may be a mobile terminal such as a smartphone or a mobile phone. The mobile body may be a mobile body that moves on land (on the ground in a narrow sense) or may be a mobile body that moves underground. The mobile body may be a mobile body that moves on water or may be a mobile body that moves under water. The mobile body may be a mobile body that moves in the atmosphere or may be a mobile body that moves outside the atmosphere. The relay station 30 may be a ground station device or a non-ground station device. The relay station 30 may be an aircraft station, a satellite station, or the like.

Similarly to the base station 20, the magnitude of the coverage of the relay station 30 may be large such as the macro cell or small such as the pico cell. The magnitude of the coverage of the relay station 30 may be extremely small such as a femtocell. The relay station 30 may have the beamforming function. At this time, in the relay station 30, a cell or a service area may be formed for each beam. Furthermore, the relay station 30 may have the pointforming function. At this time, in the relay station 30, a cell or a service area may be formed for each point.

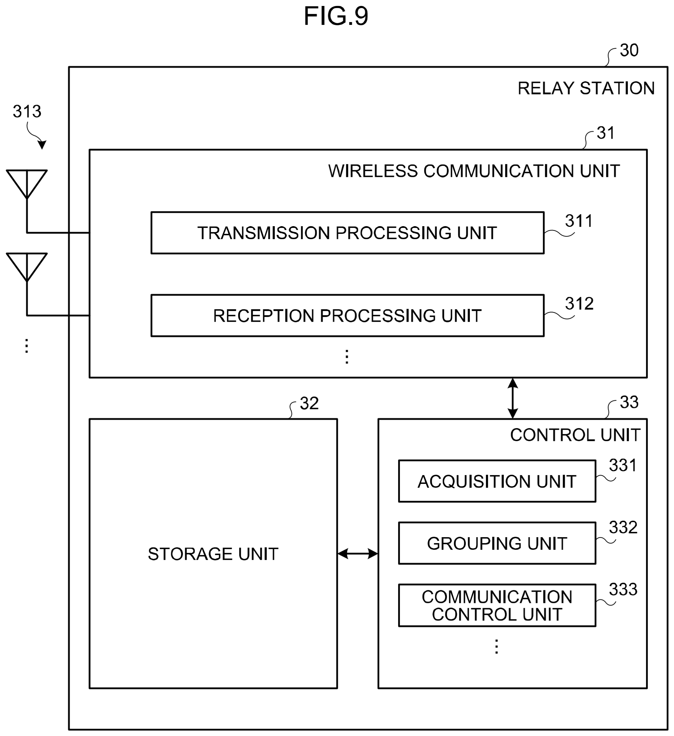

FIG. 9 is a diagram illustrating the configuration of the relay station 30 according to the present embodiment. The relay station 30 includes a wireless communication unit 31, a storage unit 32, and the control unit 33. However, the configuration illustrated in FIG. 9 is a functional configuration, and the hardware configuration may be different from the functional configuration. Furthermore, functions of the relay station 30 may be implemented in a distributed manner in a plurality of physically separated structures.

The wireless communication unit 31 is a signal processing unit for wirelessly communicating with another wireless communication apparatus (e.g., the base station 20, the terminal device 40, or another relay station 30). The wireless communication unit 31 corresponds to one or a plurality of radio access systems. The wireless communication unit 31 may correspond to at least one of the NR, LTE, and 6G. The wireless communication unit 31 may support the W-CDMA, cdma 3000, and the like in addition to the NR, LTE, and 6G.

The wireless communication unit 31 includes a transmission processing unit 311, a reception processing unit 312, and an antenna 313. The wireless communication unit 31 may include a plurality of transmission processing units 311, a plurality of reception processing units 312, and a plurality of antennas 313. When the wireless communication unit 31 supports the plurality of radio access systems, each unit of the wireless communication unit 31 may be configured individually for each radio access system. The transmission processing unit 311 and the reception processing unit 312 may be individually configured by the LTE, NR, and 6G. The transmission processing unit 311 and the reception processing unit 312 may be individually configured by the cellular communication system and another communication system (e.g., Wi-Fi or Bluetooth). The configurations of the transmission processing unit 311, the reception processing unit 312, and the antenna 313 may be similar to the configurations of the transmission processing unit 211, the reception processing unit 212, and the antenna 213 of the base station 20 described above. The wireless communication unit 31 may have the beamforming function similarly to the wireless communication unit 21 of the base station 20. The wireless communication unit 31 may have the pointforming function similarly to the wireless communication unit 21 of the base station 20.

The storage unit 32 is a storage device capable of reading and writing data, such as a DRAM, an SRAM, a flash memory, or a hard disk.

The control unit 33 is a controller that controls each part of the relay station 30. The control unit 33 may be realized by a processor such as a CPU or an MPU. Specifically, the control unit 33 may be implemented by a processor executing various programs stored in a storage device inside the relay station 30 using a RAM or the like as a work area. The control unit 33 may be realized by an integrated circuit such as the ASIC or the FPGA. The CPU, the MPU, the ASIC, and the FPGA can all be regarded as controllers. Furthermore, the control unit 33 may be realized by the GPU. Any of the CPU, the MPU, the ASIC, the FPGA, and the GPU can be regarded as the controller. Note that the control unit 33 may include a plurality of physically separated objects. For example, the control unit 33 may include a plurality of semiconductor chips. The configuration and function of the control unit 33 may be similar to the configuration and function of the control unit 23 of the base station 20 described above.

The control unit 33 includes an acquisition unit 331, a grouping unit 332, and a communication control unit 333. Each block (acquisition unit 331 to communication control unit 333) configuring the control unit 33 is a functional block indicating each function of the control unit 33. These functional blocks may be software blocks or hardware blocks. For example, each of the functional blocks described above may be one software module realized by software (including a microprogram), or may be one circuit block on a semiconductor chip (die). It is apparent that each functional block may be one processor or one integrated circuit. The control unit 33 may be configured by a functional unit different from the above-described functional blocks. A configuration method of the functional blocks is arbitrary. Note that the operation of each block (the acquisition unit 331 to the communication control unit 333) configuring the control unit 33 may be the same as the operation of each block included in the control unit 13 of the management device 10, the control unit 23 of the base station 20, or the control unit 43 of the terminal device 40.

Note that the relay station 30 may be an IAB relay node. The relay station 30 operates as an IAB-mobile termination (MT) for an IAB donor node that provides the backhaul, and operates as an IAB-distributed unit (DU) for the terminal device 40 that provides an access. The IAB donor node may be, for example, the base station 20, and operates as an IAB-central unit (CU).

### <2-6. Configuration of terminal device>

The terminal device 40 is a wireless communication apparatus that performs wireless communication with another wireless communication apparatus (e.g., the base station 20, the relay station 30, another terminal device 40, or the like). As the terminal device 40, any form of information processor (computer) can be employed. For example, the terminal device 40 may be a mobile terminal such as a mobile phone, a smart device (smartphone or tablet), a personal digital assistant (PDA), or a notebook PC. Furthermore, the terminal device 40 may be an imaging device (e.g., camcorder) having a communication function. Furthermore, the terminal device 40 may be a motorcycle, a mobile relay car, or the like on which a communication device such as the FPU is mounted. Furthermore, the terminal device 40 may be a machine to machine (M2M) device or an Internet of things (IoT) device. Still more, the terminal device 40 may be a wearable device such as a smart watch.

Still more, the terminal device 40 may be an xR device such as an augmented reality (AR) device, a virtual reality (VR) device, or a mixed reality (MR) device. At this time, the xR device may be an eyewear device such as AR glasses and MR glasses, or may be a head-mounted device such as a VR head-mounted display. When the terminal device 40 is the xR device, the terminal device 40 may be a standalone device including only a user wearing part (e.g., eyewear part). Furthermore, the terminal device 40 may be a terminal interlocking device including a user wearing part (e.g., eyewear part) and a terminal part (e.g., smart device) interlocked with the user wearing part.

The terminal device 40 may be able to perform the NOMA communication with the base station 20. The terminal device 40 may be capable of using an automatic retransmission technology such as HARQ when communicating with the base station 20. The terminal device 40 may be able to perform sidelink communication with another terminal device 40. The terminal device 40 may be capable of using the automatic retransmission technology such as HARQ when performing the sidelink communication. The terminal device 40 may be able to perform the NOMA communication when performing the sidelink communication with another terminal device 40. The terminal device 40 may be able to perform LPWA communication with other wireless communication apparatuses such as the base station 20. The wireless communication used by the terminal device 40 may be wireless communication using millimeter waves. The wireless communication used by the terminal device 40 may be wireless communication using radio waves including the sidelink communication, or may be wireless communication using infrared rays or visible light, i.e., optical wireless communication.

The terminal device 40 may be a movable wireless communication apparatus, i.e., a mobile device. The terminal device 40 may also be a wireless communication apparatus installed in a mobile body or may be the mobile body itself. The terminal device 40 may also be a vehicle that moves on a road, such as an automobile, a bus, a truck, and a motorcycle, or a wireless communication apparatus mounted on the vehicle. The mobile body may be a mobile terminal, or may be a mobile body that moves on land (on the ground in a narrow sense), underground, on water, or underwater. Furthermore, the mobile body may be a mobile body that moves in the atmosphere, such as an aircraft, an airship, a balloon, or a helicopter, or may be a mobile body that moves outside the atmosphere, such as an artificial satellite. The mobile body may be an unmanned aerial vehicle (UAV) such as a drone. Furthermore, the terminal device 40 may be a wireless communication apparatus mounted on a mobile body.

The terminal device 40 may be able to communicate by being connected to a plurality of base stations 20 or a plurality of cells at the same time. When one base station 20 supports a communication area via a plurality of cells (e.g., pCell or sCell), the plurality of cells can be bundled to communicate between the base station 20 and the terminal device 40 by a carrier aggregation (CA) technology, a dual connectivity (DC) technology, a multi-connectivity (MC) technology, or the like. Alternatively, the terminal device 40 and the plurality of base stations 20 may communicate with each other by a coordinated multipoint transmission and reception (CoMP) technology through cells of different base stations 20.

The terminal device 40 may be capable of the sidelink communication. Furthermore, the terminal device 40 may be a relay terminal that relays communication to another communication apparatus. For example, the terminal device 40 may be a relay terminal that relays communication to a remote terminal.

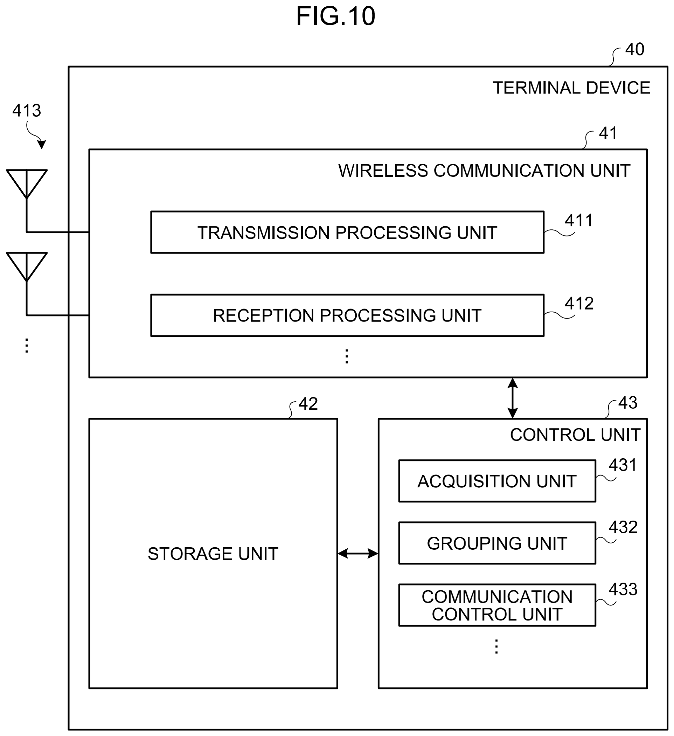

FIG. 10 is a diagram illustrating a configuration of the terminal device 40 according to the present embodiment. The terminal device 40 includes a wireless communication unit 41, a storage unit 42, and a control unit 33. However, the configuration illustrated in FIG. 10 is a functional configuration, and a hardware configuration may be different thereto. Furthermore, functions of the terminal device 40 may be implemented in a distributed manner in a plurality of physically separated configurations.

The wireless communication unit 41 is a signal processing unit that performs wireless communication with another wireless communication apparatus (e.g., the base station 20, the relay station 30, or another terminal device 40). The wireless communication unit 41 is controlled by the control unit 43. The wireless communication unit 41 corresponds to one or a plurality of radio access systems. The wireless communication unit 41 may correspond to at least one of the NR, LTE, and 6G. The wireless communication unit 41 may support W-CDMA, cdma 2000, and the like in addition to the NR, LTE, and 6G. The wireless communication unit 41 may support an automatic retransmission technology such as hybrid automatic repeat request (HARQ).

The wireless communication unit 41 includes a transmission processing unit 411, a reception processing unit 412, and an antenna 413. The wireless communication unit 41 may include a plurality of transmission processing units 411, a plurality of reception processing units 412, and a plurality of antennas 413. When the wireless communication unit 41 supports a plurality of radio access systems, each part of the wireless communication unit 41 can be configured individually for each of the radio access systems. The transmission processing unit 411 and the reception processing unit 412 may be individually configured by the LTE, NR, and 6G. The transmission processing unit 411 and the reception processing unit 412 may be individually configured by a cellular communication system and another communication system (e.g., Wi-Fi or Bluetooth). The antenna 413 may include a plurality of antenna elements, for example, a plurality of patch antennas.

The wireless communication unit 41 may have the beamforming function. For example, the wireless communication unit 41 may have a polarization beamforming function (or a polarization beamforming function using dual-polarized waves in the polarization directions at 45 degrees and -45 degrees from the vertical direction) using vertically polarized waves (V-polarized waves) and horizontally polarized waves (H-polarized waves). Furthermore, the wireless communication unit 41 may have the pointforming function. In addition, configurations of the transmission processing unit 411, the reception processing unit 412, and the antenna 413 may be similar to the configurations of the transmission processing unit 211, the reception processing unit 212, and the antenna 213 of the base station 20 described above.

The storage unit 42 is a storage device capable of reading and writing data, such as a DRAM, an SRAM, a flash memory, or a hard disk.

The control unit 43 is a controller that controls each part of the terminal device 40. The control unit 43 controls the wireless communication unit to perform wireless communication with another wireless communication apparatus (e.g., the base station 20, the relay station 30, or another terminal device 40). The control unit 43 may be realized by a processor such as a CPU or an MPU. Specifically, the control unit 43 may be realized by a processor executing various programs stored in a storage device inside the terminal device 40 using a RAM or the like as a work area. The control unit 43 may be realized by an integrated circuit such as an ASIC or an FPGA. The CPU, the MPU, the ASIC, and the FPGA can all be regarded as controllers. The control unit 43 may be realized by the GPU. Any of the CPU, the MPU, the ASIC, the FPGA, and the GPU can be regarded as the controller. Note that the control unit 43 may include a plurality of physically separated objects. For example, the control unit 43 may include a plurality of semiconductor chips.

The control unit 43 includes an acquisition unit 431, a grouping unit 432, and a communication control unit 433. Each block (acquisition unit 431 to communication control unit 433) configuring the control unit 43 is a functional block indicating each function of the control unit 43. These functional blocks may be software blocks or hardware blocks. For example, each of the functional blocks described above may be one software module realized by software (including a microprogram), or may be one circuit block on a semiconductor chip (die). It is apparent that each functional block may be one processor or one integrated circuit. Note that the control unit 43 may be configured by a functional unit different from the above-described functional blocks. A configuration method of the functional blocks is arbitrary. Note that the operation of each block (the acquisition unit 431 to the communication control unit 433) configuring the control unit 43 may be the same as the operation of each block included in the control unit 13 of the management device 10, the control unit 23 of the base station 20, or the control unit 33 of the relay station 30.

### <2-7. Network architecture>

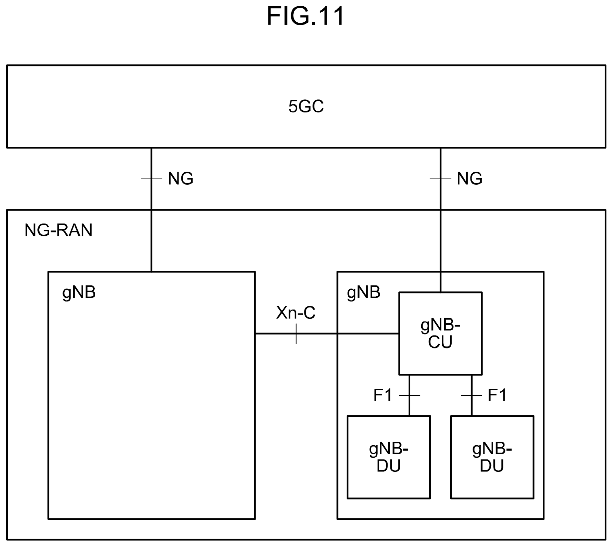

Non Patent Literature 3 (3GPP TS 38.401 V16.8.0) describes an NG RAN architecture defined by 3GPP. FIG. 11 is a diagram illustrating an example of the NG RAN architecture. Hereinafter, the definition and configuration of names in functional splits in the present embodiment will be described with reference to FIG. 11. Note that the functional splits of the present embodiment are not limited to the following description.

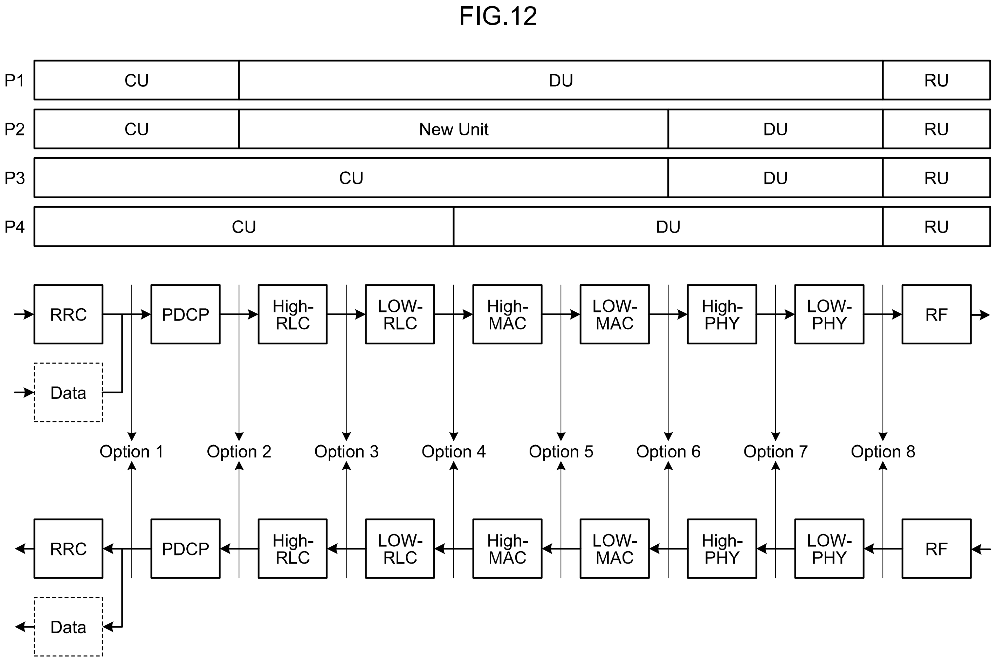

In the current standard, functions of the base station (gNB in an example in FIG. 11) are separated into two, a central unit (CU) and a distributed unit (DU). FIG. 12 is a diagram illustrating a boundary between the CU and the DU. Currently, the boundary (also referred to as a split point or a decomposition point) between the CU and the DU is set between a packet data convergence protocol (PDCP) layer and a radio link control (RLC) layer (Option 2) in a 3GPP protocol stack, as illustrated in P1 of FIG. 12.

Here, the DU may include some or all of RF functions known by names such as a radio remote head (RRH), a remote radio unit (RRU), and a radio unit (RU). In addition, functions may be further split in the DU. At this time, the DU may be divided into functions with and without the RF function. When the functional split is performed, the femto cell or the micro cell may be configured with a function group at least including the RF function.

It is assumed that one gNB includes one CU and one or more DUs. In addition, it is assumed that one DU is connected to only one CU. Note that, for communication flexibility, one DU may be connected to a plurality of CUs in an appropriate implementation.

In order to establish communication between the CU and the DU, "F1" is defined as an interface between these units in the 3GPP. This interface is a logical interface. For example, an IP packet passes through a network such as Ethernet (registered trademark) (IEEE 802.3) to establish communication between the CU and the DU. This is one form of the aforementioned backhaul and midhaul.

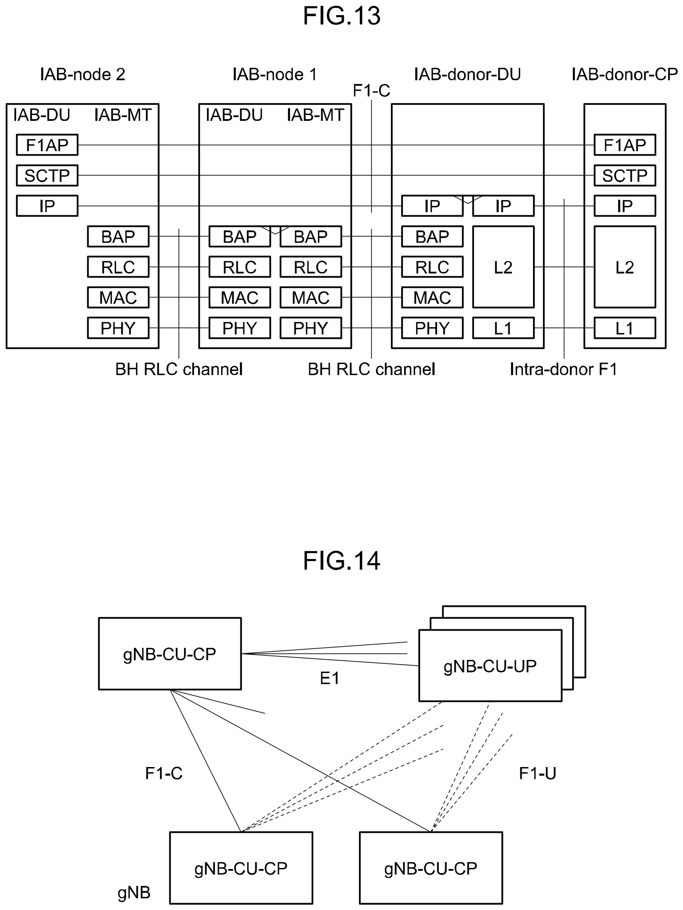

Since a general public network is used as a communication path, F1 is a non-ideal wired interface that is difficult to synchronize between communication paths. Note that an F1 interface of the present embodiment is not limited to this example. For example, the standard also considers a case where the F1 interface is wireless. The integral and backhaul (IAB) is a wireless F1 interface. FIG. 13 is a diagram illustrating an example of an IAB architecture (C-plane). In the IAB, F1 is wireless between the DU on the IAB donor or the IAB node and a mobile terminal (MT) on the IAB node.

In addition, the CU and the DU may be implemented by being divided into a control plane (CP) and a user plane (UP). FIG. 14 is a diagram illustrating an example of a gNB architecture in a state where the CP and the UP are separated. In the 3GPP standard, the gNB includes one CU-CP, a plurality of CU-UPs, and the DU.

### <<3. Basic operation of communication system>>

The configuration of the communication system 1 has been described above, and the basic operation of the communication system 1 will be described before describing the operation of the communication system 1 according to the present embodiment that solves the problem.

In the following description, the base station 20 can be rephrased as a gateway. In addition, the base station 20 may be rephrased as the relay station 30.

### <3-1. Example of connection procedure>

First, an example of a procedure to connect the terminal device 40 to the base station 20 will be described.

### <3-1-1. Initial connection process>

First, an initial connection process will be described.

The initial connection process is a process for transitioning a wireless connection state of the terminal device 40 from an unconnected state to a connected state. The unconnected state is, for example, RRC_IDLE or RRC_INACTIVE. RRC_IDLE is an idle state in which the terminal device is not connected to any cell, and is also referred to as an idle mode. Further, RRC_INACTIVE is a wireless connection state indicating an inactive state newly defined in the NR, and is also referred to as an inactive mode. In RRC_INACTIVE, RRC connection itself is not established between the terminal device 40 and the base station, but the terminal device 40 and the base station may mutually retain some UE contexts. The terminal device 40 and the base station may use the UE contexts retained to speed up the transition of the terminal device 40 to the connected state again. Note that the unconnected state may include a lightning mode. Furthermore, the connected state is, for example, RRC_CONNECTED. RRC_CONNECTED is the connected state in which the terminal device establishes a connection with a specific cell (e.g., primary cell), and is also referred to as a connected mode.

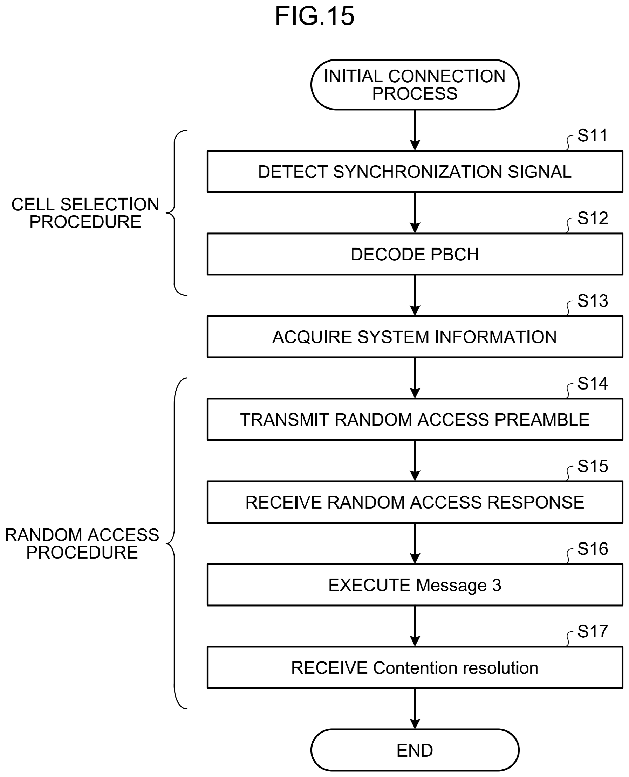

FIG. 15 is a flowchart illustrating an example of the initial connection process. The initial connection process will be described below with reference to FIG. 15. The initial connection process described below is executed, for example, when the terminal device 40 is powered on.

First, the terminal device 40 in the unconnected state performs a cell selection procedure (cell search). The cell selection procedure (cell search) is a procedure for user equipment (UE) to detect a physical cell ID (PCI) of a cell and achieve time and frequency synchronization. The cell search according to the present embodiment includes steps of detecting a synchronization signal and decoding a physical broadcast channel (PBCH). The terminal device 40 detects the synchronization signal of the cell (Step S11).

The terminal device 40 performs downlink synchronization with the cell based on the synchronization signal detected. Then, after the downlink synchronization is established, the terminal device 40 attempts to decode the PBCH and acquires a master information block (MIB) that is a part of system information (Step S12).

The system information is information for broadcasting a setting in a cell to which the system information is transmitted. The system information may be information common to all the terminal devices 40 belonging to the cell. The system information may be information specific to the cell. The system information includes, for example, information regarding access to the cell, information regarding cell selection, and information regarding other RATs and other systems. The system information includes the MIB and a system information block (SIB). The MIB is information necessary for receiving the SIB and the like, and is information on a fixed payload size broadcast by the PBCH. The MIB includes a part of a system frame number, subcarrier spacing information of predetermined information (e.g., SIB1, Msg.2/Msg.4 for initial connection, paging, and broadcast SI message), subcarrier offset information, DMRS type A location information, PDCCH setting for at least the SIB1, cell barred information, and intra-frequency reselection information. The SIB is system information other than the MIB and is broadcast by the PDSCH.

The system information can be classified into first system information, second system information, and third system information. The first system information and the second system information include information regarding access to the cell, information regarding acquisition of other system information, and information regarding cell selection. Information included in the MIB is the first system information. The information included in the SIB1 among the SIB is the second system information (e.g., remaining minimum SI). Remaining system information is the third system information (e.g., other SI).

Also in the NR, system information is broadcast from the NR cell. A physical channel carrying the system information may be transmitted in a slot or a mini-slot. The mini-slot is defined by the number of symbols smaller than the number of symbols of the slot. Since the physical channel carrying the system information is transmitted in the mini-slot, time required for a beam sweep is shortened, and an overhead can be reduced. For the NR, the first system information is transmitted on the NR-PBCH, and the second system information is transmitted on a physical channel different from the NR-PBCH.

The terminal device 40 acquires the second system information based on the MIB(i.e., first system information) (Step S13). As described above, the second system information includes the SIB1 and an SIB2.

The SIB1 is access control information of the cell and scheduling information of system information other than the SIB1. In the case of the NR, the SIB1 includes information regarding the cell selection (e.g., cellSelectionInfo), information regarding the cell access (e.g., cellAccessRelatedInfo), information regarding connection establishment failure control (e.g., connEstFailureControl), scheduling information of system information other than the SIB1 (e.g., si-SchedulingInfo), and setting of a serving cell. The setting of the serving cell includes a cell-specific parameter, and includes a downlink setting, an uplink setting, and TDD setting information. The uplink setting includes a RACH setting and the like. Further, in the case of the LTE, the SIB1 includes cell access information, cell selection information, maximum uplink transmission power information, TDD setting information, a period of system information, mapping information of system information, and a system information (SI) window length.

In the case of the NR, the SIB2 includes cell reselection information (e.g., cellReselectionInfoCommon) and cell reselection serving frequency information (e.g., crelReselectionServingFreqInfo). In the case of the LTE, the SIB2 includes connection prohibition information, radio resource setting information (radioResourceConfigCommon) common to cells, and uplink carrier information. The radio resource setting information common to cells includes setting information of a physical random access channel (PRACH) and a random access channel (RACH) common to cells.

When the terminal device 40 cannot acquire the system information necessary for establishing the link, the terminal device 40 determines that the access to the cell is prohibited. For example, when the first system information cannot be acquired, the terminal device 40 determines that access to the cell is prohibited. In this case, the terminal device 40 ends the initial connection process.

When the system information can be acquired, the terminal device 40 executes a random access procedure based on the first system information and/or the second system information (Steps S14 to S17). The random access procedure may be referred to as a random access channel procedure (RACH procedure) or a RA procedure.

The random access procedure includes steps of transmitting a random access preamble (Step S14), receiving a random access response (Step S15), transmitting Message 3 (Step S16), and receiving contention resolution (Step S17).

First, the terminal device 40 selects a predetermined physical random access channel (PRACH) preamble and transmits it to the base station 20 (Step S14). Next, the terminal device 40 receives a physical downlink shared channel (PDSCH) including the random access response corresponding to the PRACH preamble (Step S15). Next, the terminal device 40 transmits the PUSCH including Message 3 using a resource scheduled by a random access response grant included in the random access response (Step S16). Finally, the terminal device 40 receives the PDSCH including the contention resolution corresponding to the PUSCH (Step S17).

Message 3 includes a radio resource control (RRC) message of a RRC connection request. The contention resolution includes a RRC message of RRC connection setup. When receiving the RRC message of the RRC connection setup, the terminal device 40 performs an RRC connection operation and transitions from the RRC idle state to the RRC connected state. After transitioning to the RRC connected state, the terminal device 40 transmits an RRC message indicating RRC connection setup completion to the base station 20. Through the series of operations, the terminal device 40 can be connected to the base station 20.

Note that the random access preamble may be referred to as Message 1, the random access response may be referred to as Message 2, the collision resolution may be referred to as Message 4, and the RRC connection setup completion message may be referred to as Message 5.

After all the steps of the random access procedure are completed, the terminal device 40 can transition to a state connected to the cell (connected state).

Note that the random access procedure in FIG. 15 may be referred to as a four-step random access procedure (four-step RACH procedure). On the other hand, the random access procedure in which the terminal device 40 also transmits Message 3 in association with the transmission of the random access preamble, and the base station 20 transmits a random access response and contention resolution as a response thereof may be referred to as a 2-step random access procedure (2-step RACH procedure).

### <3-1-2. Random access procedure>

Next, the random access procedure will be described in detail.

The random access procedure is performed for the purpose of the "RRC connection setup" from the idle state to the connected state (or the inactive state), a "state transition request" from the inactive state to the connected state, and the like. The random access procedure is also used for the purpose of a "scheduling request" for making a resource request for uplink data transmission and "timing advance adjustment" for adjusting uplink synchronization. In addition, the random access procedure is performed in the case of an "on-demand SI request" for requesting system information that is not transmitted, "beam recovery" for recovering interrupted beam connection, "handover" for switching a connected cell, and the like.

The "RRC connection setup" is an operation executed when the terminal device 40 is connected to the base station 20 according to generation of traffic or the like. Specifically, the "RRC connection setup" is the operation of passing information regarding connection (e.g., UE context) from the base station 20 to the terminal device 40. The UE context is managed by predetermined communication apparatus identification information (e.g., C-RNTI) instructed from the base station 20. When this operation is completed, the terminal device 40 transitions from the idle state to the inactive state or from the idle state to the connected state.

The "state transition request" is the operation in which the terminal device 40 requests state transition from the inactive state to the connected state according to generation of traffic or the like. By transitioning to the connected state, the terminal device 40 can transmit and receive unicast data to and from the base station 20.

The "scheduling request" is the operation in which the terminal device 40 makes a resource request for uplink data transmission according to generation of traffic or the like. After normally receiving the scheduling request, the base station 20 allocates a PUSCH resource to the communication apparatus. Note that the scheduling request is also performed by the PUCCH.

The "timing advance adjustment" is the operation for adjusting an error between downlink and uplink frames caused by a propagation delay. The terminal device 40 transmits the physical random access channel (PRACH) at a timing adjusted to the downlink frame. As a result, the base station 20 can recognize a propagation delay with the terminal device 40, and can instruct a timing advance value to the terminal device 40 by Message 2 or the like.

The "on-demand SI request" is the operation of requesting the base station 20 to transmit system information when the terminal device 40 needs system information that is not transmitted for the purpose of overhead or the like of the system information.

The "beam recovery" is the operation of making a recovery request when communication quality is deteriorated due to movement of the terminal device 40 or interruption of a communication path by another object after the beam is established. Upon receiving this request, the base station 20 attempts connection to the terminal device 40 using a different beam.

The "handover" is the operation of switching connection from a cell (serving cell) to which the terminal device 40 is connected to a cell (neighbor cell) adjacent to the connected cell due to a change in a radio wave environment such as movement of the terminal device 40. The terminal device 40 that has received the handover command from the base station 20 makes a connection request to the neighbor cell designated by the handover command.

The random access procedure includes a contention based random access procedure and a non-contention based random access procedure.

Note that the random access procedure described below is a random access procedure assuming that the RAT supported by the communication system 1 is the LTE. However, the random access procedure described below is also applicable to a case where the RAT supported by the communication system 1 is other than the LTE. For example, the random access procedure described below is also applicable to a case where the RAT supported by the communication system 1 is 6G.

Hereinafter, the contention based random access procedure and the non-contention based random access procedure will be described in detail.

### <Contention based random access procedure>

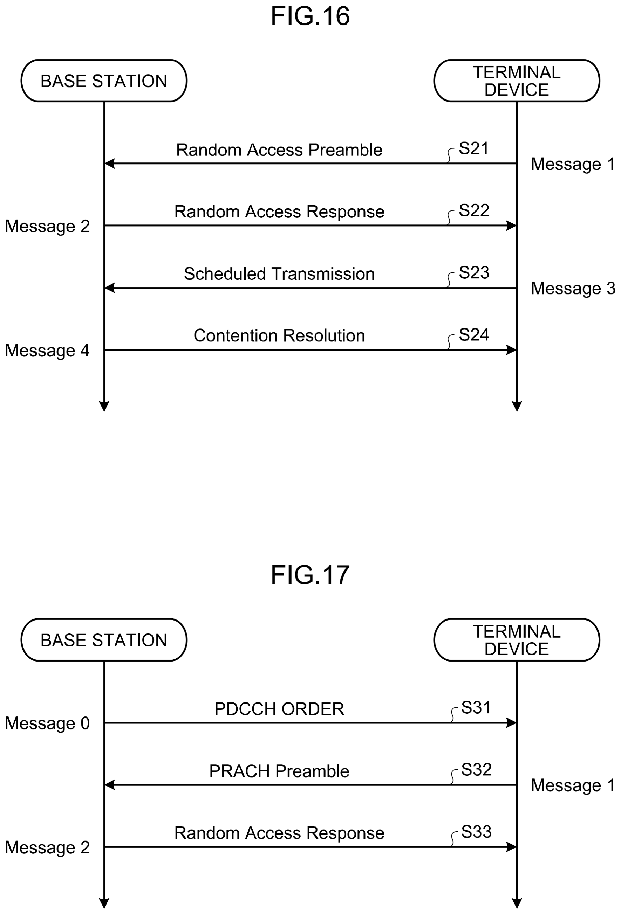

The contention based random access procedure is a random access procedure performed on the initiative of the terminal device 40. FIG. 16 is a diagram illustrating a contention based random access procedure. As illustrated in FIG. 16, the contention based random access procedure is a four-step procedure starting from transmission of the random access preamble from the terminal device 40. The contention based random access procedure includes the steps of transmitting the random access preamble (Message 1), receiving the random access response (Message 2), transmitting a message (Message 3), and receiving a message (Message 4) for contention resolution.

First, the terminal device 40 randomly selects a preamble sequence to be used from a plurality of predetermined preamble sequences. Then, the terminal device 40 transmits a message (Message 1: Random access preamble) including the preamble sequence selected to the base station 20 that is a connection destination (Step S21). The random access preamble is transmitted on the PRACH.

When receiving the random access preamble, the base station 20 transmits the random access response (Message 2) to the terminal device 40. This random access response is transmitted using, for example, the PDSCH. The terminal device 40 receives the random access response (Message 2) transmitted from the base station 20 (Step S22). The random access response includes one or more random access preambles that can be received by the base station 20 and a resource of an uplink (UL) (hereinafter referred to as an uplink grant) corresponding to the random access preamble. In addition, the random access response includes a temporary cell radio network temporary identifier (TC-RNTI) that is an identifier unique to the terminal device 40 temporarily allocated to the terminal device 40 by the base station 20.

Upon receiving the random access response from the base station 20, the terminal device 40 determines whether or not the random access preamble transmitted in Step S21 is included in the information received. When the random access preamble is included, the terminal device 40 extracts the uplink grant corresponding to the random access preamble transmitted in Step S21 from uplink grants included in the random access response. Then, the terminal device 40 transmits a UL message (Message 3: Scheduled transmission) using a resource scheduled by the uplink grant extracted (Step S23). The message (Message 3) is transmitted using the PUSCH. The message (Message 3) includes a radio resource control (RRC) message for an RRC connection request. Further, the message (Message 3) includes an identifier of the terminal device 40.

In the contention based random access procedure, the random access preamble randomly selected by the terminal device 40 is used for the procedure. Therefore, there may be a case where the terminal device 40 transmits the random access preamble, and at the same time, another terminal device 40 transmits the same random access preamble to the base station 20. Therefore, by receiving the identifier transmitted by the terminal device 40 in Step S23, the base station 20 recognizes between which terminal devices a preamble conflict has occurred and resolves the conflict. The base station 20 transmits contention resolution (Message 4: Contention resolution) to the terminal device 40 selected by the contention resolution. The contention resolution (Message 4) includes the identifier transmitted by the terminal device 40 in Step S23. Further, the contention resolution (Message 4) includes an RRC message of RRC connection setup. The terminal device 40 receives the contention resolution message (Message 4) transmitted from the base station 20 (Step S24).

The terminal device 40 compares the identifier transmitted in Step S23 with the identifier received in Step S24. When the identifiers do not match, the terminal device 40 performs the random access procedure again from Step S21. When the identifiers match, the terminal device 40 performs the RRC connection operation and transitions from the idle state (RRC_IDLE) to the connected state (RRC_CONNECTED). The terminal device 40 uses TC-RNTI acquired in Step S22 as a cell radio network temporary identifier (C-RNTI) in subsequent communication. After transitioning to the connected state, the terminal device 40 transmits an RRC message indicating the RRC connection setup completion to the base station 20. The RRC connection setup completion message is also referred to as Message 5. Through the series of operations, the terminal device 40 is connected to the base station 20.

Note that the contention based random access procedure illustrated in FIG. 16 is the four-step random access procedure (four-step RACH). However, the communication system 1 can also support a two-step random access procedure (two-step RACH) as the contention based random access procedure. For example, the terminal device 40 transmits the random access preamble and also transmits the message described in Step S23 (Message 3). Then, the base station 20 transmits the random access response (Message 2) and the contention resolution (Message 4) as the responses. Since the random access procedure is completed in two steps, the terminal device 40 can be quickly connected to the base station 20.

Note that Message 1 may be described as "Msg 1" or "Msg. 1". Message 2 may be described as "Msg 2" or "Msg. 2". Message 3 may be described as "Msg 3" or "Msg. 3". Message 4 may be described as "Msg 4" or "Msg. 4".

### <Non-contention based random access procedure>

The non-contention based random access procedure is a random access procedure performed on the initiative of the base station 20. FIG. 17 is a diagram illustrating the non-contention based random access procedure. The non-contention based random access procedure is a three-step procedure starting from transmission of a random access preamble assignment from the base station 20. The non-contention based random access procedure includes steps of receiving the random access preamble assignment (Message 0), transmitting the random access preamble (Message 1), and receiving the random access response (Message 2).

In the contention based random access procedure, the terminal device 40 randomly selects the preamble sequence. However, in the non-contention based random access procedure, the base station 20 allocates an individual random access preamble to the terminal device 40. The terminal device 40 receives the random access preamble assignment (Message 0: RA preamble assignment) from the base station 20 (Step S31).

The terminal device 40 performs a random access to the base station 20 by using the random access preamble assigned in Step S31. In other words, the terminal device 40 transmits the assigned random access preamble (Message 1) to the base station 20 by the PRACH (Step S32).

The base station 20 receives the random access preamble (Message 1) from the terminal device 40. Then, the base station 20 transmits the random access response (Message 2: Random access response) to the random access preamble to the terminal device 40 (Step S33). The random access response includes, for example, information on the uplink grant corresponding to the received random access preamble. When receiving the random access response (Message 2), the terminal device 40 performs the RRC connection operation and transitions from the idle state (RRC_IDLE) to the connected state (RRC_CONNECTED).

As described above, in the non-contention based random access procedure, since the base station 20 schedules the random access preamble, a collision of preambles hardly occurs.

Message 0 may be described as "Msg 0" or "Msg. 0". Message 1 may be described as "Msg 1" or "Msg. 1". Message 2 may be described as "Msg 2" or "Msg. 2".

### <3-1-3. Details of NR random access procedure>

The random access procedure assuming that the RAT supported by the communication system 1 is the LTE has been described above. Note that the random access procedure described above can also be applied to the RAT other than the LTE. Hereinafter, a random access procedure assuming that the RAT supported by the communication system 1 is the NR will be described in detail.

Note that, in the following description, four steps regarding Message 1 to Message 4 illustrated in FIG. 16 or 17 will be described in detail. The step of Message 1 corresponds to Step S21 illustrated in FIG. 16 and Step S32 illustrated in FIG. 17. The step of Message 2 corresponds to Step S22 illustrated in FIG. 16 and Step S33 illustrated in FIG. 17. The step of Message 3 corresponds to Step S23 illustrated in FIG. 16. The step of Message 4 corresponds to Step S24 illustrated in FIG. 16.

### NR random access preamble (Message 1)

In the NR, the PRACH is called a NR physical random access channel (NR-PRACH). The NR-PRACH is configured using a Zadoff-Chu sequence. In the NR, a plurality of preamble formats is defined as a format of the NR-PRACH. The preamble format is defined by a combination of PRACH parameters such as a subcarrier interval, a transmission bandwidth, a sequence length, the number of symbols used for transmission, the number of transmission repetitions, a cyclic prefix (CP) length, a guard period length, and the like. Preamble sequence types of the NR-PRACH are numbered. The number of the preamble sequence type is referred to as a preamble index.

In the NR, setting regarding the NR-PRACH is performed on the terminal device 40 in the idle state by the system information. Furthermore, setting regarding the NR-PRACH is performed on the terminal device 40 in the connected state by dedicated RRC signaling.

The terminal device 40 transmits the NR-PRACH using a physical resource (NR-PRACH occasion) that can be transmitted by the NR-PRACH. The physical resource is indicated by the setting regarding the NR-PRACH. The terminal device 40 selects one of physical resources and transmits the NR-PRACH. Further, when the terminal device 40 is in the connected state, the terminal device 40 transmits the NR-PRACH using the NR-PRACH resource. The NR-PRACH resource is a combination of an NR-PRACH preamble and its physical resources. The base station 20 can instruct the NR-PRACH resource to the terminal device 40.

Note that the NR-PRACH is also transmitted when the random access procedure fails. When retransmitting the NR-PRACH, the terminal device 40 waits for transmission of the NR-PRACH during a standby period calculated from a backoff value (back-off indicator, BI). Note that the backoff value may be different depending on a terminal category of the terminal device 40 and a priority of the generated traffic. At that time, a plurality of back-off values is notified, and the terminal device 40 selects a back-off value to be used according to the priority. Furthermore, when retransmitting the NR-PRACH, the terminal device 40 increases the transmission power of the NR-PRACH compared to the first transmission. This procedure is referred to as power ramping.

### NR random access response (Message 2)

An NR random access response is transmitted using an NR physical downlink shared channel (NR-PDSCH). The NR-PDSCH including the random access response is scheduled by the NR physical downlink control channel (NR-PDCCH) in which a cyclic redundancy check (CRC) is scrambled by an RA-RNTI. The NR-PDCCH is transmitted by control resource set (CORESET). The NR-PDCCH in which the CRC is scrambled by the RA-RNTI is arranged in a common search space (CSS) of a Type1-PDCCH CSS set. Note that a value of a random access radio network temporary identifier (RA-RNTI) is determined based on the transmission resource of the NR-PRACH corresponding to the random access response. The transmission resources of the NR-PRACH are, for example, a time resource (slot or subframe) and a frequency resource (resource block). Note that the NR-PDCCH may be arranged in a search space corresponding to the NR-PRACH associated with the random access response. Specifically, the search space in which the NR-PDCCH is arranged is set in association with the preamble of the NR-PRACH and/or the physical resource in which the NR-PRACH is transmitted. The search space in which the NR-PDCCH is arranged is set in association with the preamble index and/or the index of the physical resource. The NR-PDCCH is a NR synchronization signal (NR-SS) and a quasi co-location (QCL).

The NR random access response is medium access control (MAC) information. The NR random access response includes at least the uplink grant for transmitting Message 3 of the NR, a timing advance value used for adjusting uplink frame synchronization, and a TC-RNTI value. In addition, the NR random access response includes a PRACH index used for the NR-PRACH transmission corresponding to the random access response. In addition, the NR random access response includes information regarding backoff used to wait for transmission of the PRACH.

The base station 20 transmits the random access response through the NR-PDSCH. The terminal device 40 determines whether or not the random access preamble has been successfully transmitted from information included in the random access response. When it is determined that the transmission of the random access preamble has been successful, the terminal device 40 performs a transmission process of Message 3 of the NR according to the information included in the random access response. On the other hand, when the transmission of the random access preamble has failed, the terminal device 40 determines that the random access procedure has failed, and performs an NR-PRACH retransmission process.

Note that the NR random access response may include a plurality of uplink grants for transmitting the Message 3 of the NR (Message 3). The terminal device 40 can select one resource for transmitting Message 3 from a plurality of uplink grants. As a result, it is possible to alleviate contention in transmission of Message 3 of the NR when different terminal devices 40 receive the same NR random access response. As a result, the communication system 1 can provide a more stable random access procedure.

### Message 3 of the NR

Message 3 of the NR is transmitted by an NR physical uplink shared channel (NR-PUSCH). The NR-PUSCH is transmitted by using a resource indicated by the random access response. Message 3 of the NR includes a RRC connection request message. A format of the NR-PUSCH is indicated by a parameter included in the system information. For example, the parameter determines whether to use an orthogonal frequency division multiplexing (OFDM) or a discrete Fourier transform spread OFDM (DFT-s-OFDM) as the format of the NR-PUSCH.

When Message 3 of the NR is normally received, the base station 20 proceeds to a transmission process of contention resolution (Message 4). On the other hand, when Message 3 of the NR cannot be normally received, the base station 20 attempts to receive Message 3 of the NR again for at least a predetermined period.

Another example of the instruction to retransmit Message 3 and the transmission resource includes an instruction by the NR-PDCCH used for the instruction to retransmit Message 3. The NR-PDCCH is an uplink grant. A resource for retransmission of Message 3 is indicated by downlink control information (DCI) of the NR-PDCCH. The terminal device 40 retransmits Message 3 based on the instruction of the uplink grant.

Note that, when the reception of the contention resolution of the NR is not successful within the predetermined period, the terminal device 40 regards that the random access procedure has failed, and performs a retransmission process of the NR-PRACH. Note that a transmission beam of the terminal device 40 used for retransmission of Message 3 of the NR may be different from the transmission beam of the terminal device 40 used for the first transmission of Message 3. Note that, when neither the NR contention resolution instruction nor Message 3 retransmission instruction has been received within the predetermined period, the terminal device 40 regards that the random access procedure has failed, and performs the retransmission process of the NR-PRACH. For example the predetermined period is set according to the system information.

### Contention resolution of NR (Message 4)

The contention resolution of the NR is transmitted by using the NR-PDSCH. The NR-PDSCH including the contention resolution is scheduled by the NR-PDCCH in which the CRC is scrambled by the TC-RNTI or the C-RNTI. The NR-PDCCH in which the CRC is scrambled by the TC-RNTI is placed in the CSS of a Type1-PDCCH CSS set. Note that the NR-PDCCH may be arranged in a user equipment specific search space (USS). Note that the NR-PDCCH may be arranged in another CSS.

When the NR-PDSCH including the contention resolution is normally received, the terminal device 40 transmits a positive response (ACK) to the base station 20. Thereafter, the terminal device 40 regards that the random access procedure has succeeded, and transitions to the connected state (RRC_CONNECTED). On the other hand, when a negative response (NACK) to the NR-PDSCH is received from the terminal device 40 or when there is no response, the base station 20 retransmits the NR-PDSCH including the contention resolution. When the contention resolution (Message 4) of the NR is not received within the predetermined period, the terminal device 40 regards that the random access procedure has failed, and performs the retransmission process of the random access preamble (Message 1).

### <3-1-4. Two-step RACH of NR>

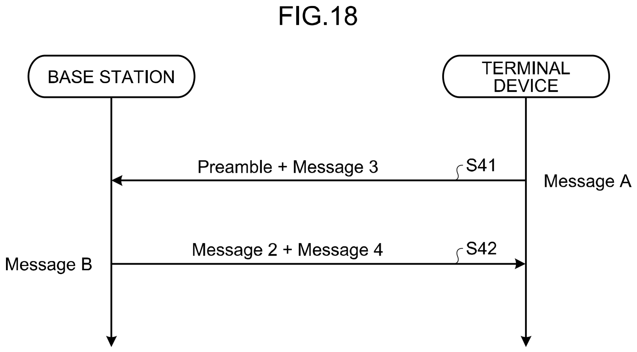

Next, an example of a two-step RACH procedure (hereinafter referred to as a two-step random access procedure) of the NR will be described. FIG. 18 is a diagram illustrating the two-step random access procedure. The two-step random access procedure includes two steps of Message A (Step S41) and Message B (Step S42). As an example, Message A includes Message 1 (preamble) and Message 3 of the conventional four-step random access procedure (four-step RACH procedure), and Message B includes Message 2 and Message 4 of the conventional four-step random access procedure. Further, as an example, Message A includes the preamble (also referred to as PRACH) and the PUSCH, and Message B includes the PDSCH.

By adopting the two-step random access procedure, the random access procedure can be completed with a lower delay as compared with the conventional four-step random access procedure.

The preamble and the PUSCH included in Message A may be set in association with each transmission resource, or may be set by an independent resource.

In a case where the transmission resources are associated, for example, the transmission resource of the PUSCH that can be unique or a plurality of candidates is determined when the transmission resource of the preamble is determined. As an example, time and frequency offsets between a preamble of a PRACH occasion and a PUSCH occasion are defined by one value. As another example, the time and frequency offset between the preamble of the PRACH occasion and the PUSCH occasion are set to different values for each preamble. An offset value may be determined by a specification, or may be semi-statically set by the base station 20. As an example of time and frequency offset values, the values are defined by a predetermined frequency. For example, in an unlicensed band (e.g., 5 GHz band, band 45), the time offset value may be set to 0 or a value close to 0. As a result, listen before talk (LBT) can be omitted before transmission of the PUSCH.

On the other hand, when transmission resources are set as independent resources, the transmission resources of the preamble and the PUSCH may be determined by the specification, or the resources may be semi-statically set by the base station 20, or may be determined from another information. Examples of another information include slot format information (e.g., slot format indicator), band width part (BWP) information, preamble transmission resource information, a slot index, and a resource block index. Furthermore, when transmission resources are set as independent resources, association between the preamble and the PUSCH configuring one Message A may be notified to the base station by the UCI included in the payload of the PUSCH or the PUSCH, or the base station 20 may be notified by a transmission physical parameter of the PUSCH (e.g., PUSCH scrambling sequence, DMRS sequence and/or pattern, or PUSCH transmission antenna port.

Still more, the method of setting transmission resources of the preamble and the PUSCH may be switched between associated setting and independent resource setting. For example, the independent resource setting may be applied to a licensed band and associated transmission resource setting may be applied to an unlicensed band.

The random access procedure assuming that the RAT supported by the communication system 1 is the NR has been described above. Note that the random access procedure described above is also applicable to the RAT other than LTE (e.g., 6G).

### <3-2. Example of communication procedure>

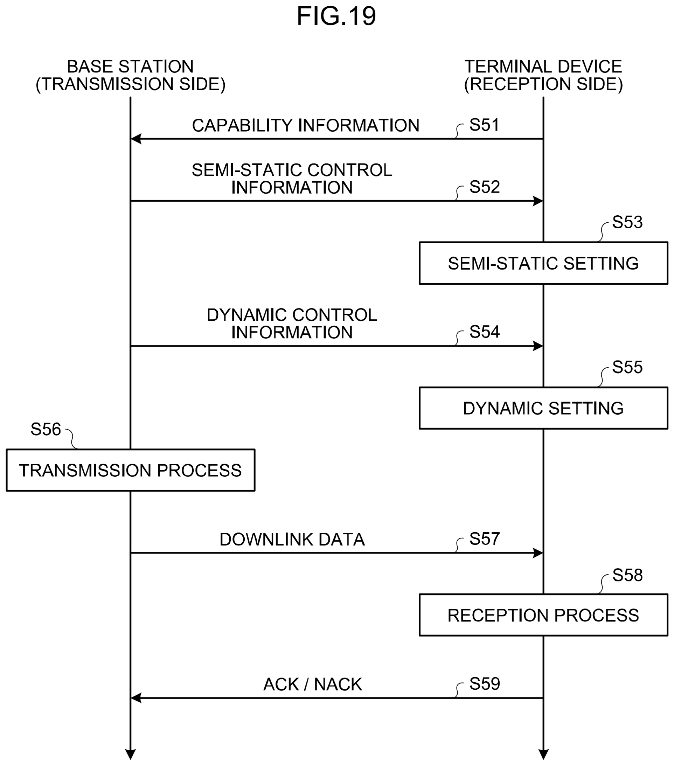

Next, an example of a communication procedure between the terminal device 40 and the base station 20 will be described. FIG. 19 is a sequence diagram illustrating the example of the communication procedure between the terminal device 40 and the base station 20. Note that the procedure example illustrated in FIG. 19 is merely an example, and a packet coding procedure is not limited thereto. Furthermore, in the example in FIG. 19, downlink communication from the base station 20 to the terminal device 40 is illustrated, but the technology disclosed in the present embodiment is also applicable to other communications (e.g., uplink communication or sidelink communication). Hereinafter, the example of the communication procedure between the terminal device 40 and the base station 20 will be described with reference to a sequence diagram in FIG. 19.

First, the terminal device 40 notifies the base station 20 of a cell to which the terminal device 40 is connected of information regarding own terminal capability of the terminal device (Step S51). The terminal device 40 may notify the information regarding terminal capability during initial access or after the initial access. Note that, as a physical channel for the notification, for example, at least one of a physical random access channel (PRACH), a physical uplink control channel (PUCCH), and a physical uplink shared channel (PUSCH) may be used. Furthermore, the information regarding terminal capability may be notified as logical information via a wire.

The base station 20 notifies the terminal device 40 connected to the cell managed by the base station 20 of semi-static control information (Step S52). The semi-static control information may be cell-specific control information. The base station 20 may notify the semi-static control information during an initial access procedure or after the initial access. Furthermore, the base station 20 may notify the control information as part of an RRC procedure such as RRC signaling, RRC configuration, or RRC reconfiguration. Furthermore, the base station 20 may periodically notify the terminal device 40 of the control information. As the physical channel for notifying the control information, at least one of a physical broadcast channel (PBCH), a physical downlink control channel, an enhanced physical downlink control channel (EPDCCH), and a physical downlink shared channel may be used.

When receiving the semi-static control information, the terminal device 40 performs various settings based on the setting information included in the control information received (Step S53).

Thereafter, when downlink communication occurs from the base station 20 to the terminal device 40, the base station 20 transmits dynamic control information to the terminal device 40 (Step S54). Examples of the case where downlink communication occurs include a case where the terminal device 40 requests data download (pull) and a case where push data to the terminal device 40 occurs. The dynamic control information may be UE-specific control information or UE-group-specific control information. Here, the UE group is, for example, a group of one or more terminal devices 40 that are transmission destinations when the downlink communication is multicast or broadcast.

Note that the dynamic control information can include various types of information such as information regarding a radio resource used to perform the downlink communication. For example, the dynamic control information can include information regarding various resources for assigning downlink communication to target terminal devices 40 (terminal device 40 group). More specifically, the dynamic control information can include, for example, the following information (1) to (10).
(1) Frequency resource (e.g., resource block, subcarrier, and subcarrier group)
(2) Time resource (e.g., subframe, slot, mini-slot, and symbol)
(3) Spatial resource (e.g., antenna, antenna port, spatial layer, and spatial stream)
(4) Non-orthogonal resource (e.g., resource related to power, interleave pattern, scrambling pattern, and diffusion pattern) regarding given communication (e.g., non-orthogonal multiple access (NOMA ), multiuser superposition transmission (MUST), interleave division multiple access (IDMA), and code division multiple access (CDMA ))
(5) Modulation order
(6) Encoding system used in packet coding (e.g., error correction coding scheme)
(7) Information regarding coding rate of packet coding
(8) Information regarding redundant data assigned to encoded sequence (e.g., information regarding error detection method and identification number of encoded sequence)
(9) ARQ/HARQ setting (e.g., New data indicator (NDI) and redundancy version (RV))
(10) Identification number of HARQ process

The terminal device 40 that has received the dynamic control information performs setting to prepare for appropriate reception of downlink communication according to the control information (Step S55).

Next, the base station 20 performs a transmission process including a physical layer process (including physical layer level forward error correction (FEC), modulation, and physical layer coding) (Step S56). The base station 20 transmits encoded and modulated data to the terminal device 40 as a radio signal (Step S57).

When receiving the data from the base station 20, the terminal device 40 executes various processes (e.g., reception process, demodulation process, and decoding process) according to the setting designated by the control information (Step S58). For example, the terminal device 40 determines whether or not an error is included in the encoded sequence restored. Then, the terminal device 40 attempts decoding using only the encoded sequence without any error. Thereafter, the terminal device 40 returns the ACK or the NACK to the base station 20 depending on whether data decoding has succeeded or failed (Step S59).

The base station 20 proceeds to retransmission or downlink communication of new data according to a process for additional transmission corresponding to the above response (ACK or NACK). Therefore, the base station 20 notifies the target terminal device 40 of the dynamic control information again, and executes the downlink communication according to the setting.

### <<4. Operation of communication system>>

The basic operation of the communication system has been described above. Next, the operation of the communication system 1 of the present embodiment will be described in detail.

Note that the base station 20 in the following embodiment is not limited to the ground station (ground base station). The base station 20 in the following embodiment may be a non-ground station (non-ground base station) that operates as a communication apparatus such as a satellite station, a drone, a balloon, or an airplane.

Furthermore, resources in the present embodiment represent frequency, time, resource elements (including REG, CCE, and CORESET), resource block, bandwidth part, component carrier, symbol, sub-symbol, slot, mini-slot, subslot, subframe, frame, PRACH occasion, occasion, code, multi-access physical resource, multi-access signature, subcarrier spacing (numerology), and the like.

In addition, in the present embodiment, a technology of locally forming a cell is referred to as pointforming, but the way of calling is not limited thereto. In addition, in the following description, a communicable area formed by the pointforming is referred to as a point cell, but the way of calling is not limited thereto.

As described above, one or a plurality of base stations 20 can form a point cell by concentrating power at a specific point under the control of a plurality of antennas (or a plurality of base stations 20). For example, one or a plurality of base stations 20 can form the point cell by concentrating power at the specific point by cooperative control of the plurality of antennas (or the plurality of base stations 20). In other words, one or more base stations 20 can form the point cell by the pointforming function.

Here, the pointforming may be characterized in that an initial phase is different between transmission antenna elements when power is concentrated at the specific point. On the other hand, the beamforming may be characterized in that an offset of an initial phase may be the same between transmission antenna elements when a beam is formed in a specific direction.

In order to perform communication using the pointforming, it is necessary to control a plurality of transmission devices. Here, the transmission device may be the base station 20, may be the DU and/or the RU included in the base station, or may be an antenna device. When the terminal device 40 performs communication at an arbitrary position using the pointforming, there is an excessive degree of freedom in selecting a transmission device to be used for communication since the terminal device 40 uses a plurality of transmission devices for communication. In particular, when a distributed antenna is used for communication, it is assumed that the number of transmission devices used by the base station 20 to establish a communication state with the terminal device 40 is extremely large.

As the number of transmission devices used for communication increases, the accuracy of pointforming improves. However, from the viewpoint of cost for control, it is not realistic to coordinate numerous transmission devices randomly selected. In order to solve this problem, a system for efficiently selecting transmission devices to be used for communication is required.

Therefore, in the present embodiment, a selection method of a transmission device to be used in the pointforming and a procedure for realizing the selection method will be described.

### <4-1. Outline of operation of communication system>

The selection method transmission device and the procedure for realizing the selection method according to the present embodiment can be roughly classified into Type 1 and Type 2. The communication apparatus (e.g., the base station 20, the relay station 30, or the terminal device 40) may select and execute any one of a plurality of procedures of different types in an opportunity of establishing a single communicable state, or may simultaneously execute a plurality of procedures of different types. In addition, the communication apparatus may execute these procedures a plurality of times within a single communication state establishment opportunity.

Outlines of Type 1 and Type 2 are as follows.

### (T1) Type 1

In Type 1, the plurality of transmission devices is grouped into a plurality of groups, statically or semi-statically, based on a predetermined criterion. For example, in Type 1, static or semi-static grouping depending on the configuration of the base station 20 is performed. The terminal device 40 acquires information for identifying a group of transmission devices (transmission device group) used for the pointforming (hereinafter referred to as group identifying information). Then, the terminal device 40 identifies a group to be used for communication based on the group identifying information, and connects to the base station 20 via the transmission device of the identified group.

Specific examples of the grouping method according to Type 1 include three types, from Type 1-1 to Type 1-3.
Type 1-1: Grouping method depending on configuration of functional split of the base station 20
Type 1-2: Grouping method under condition of transmission delay depending on configuration of the transmission device
Type 1-3: Grouping method considering quality of the pointforming

Details of Type1 (definition of group unit, group determination method, and procedure) will be described in detail later.

### (T2) Type 2

In Type 2, the plurality of transmission devices is dynamically grouped into a plurality of groups. For example, in Type 2, the base station 20 dynamically groups the plurality of transmission devices based on information from the terminal device 40, a channel state, or a resource usage status. For example, the base station 20 sets transmission devices satisfying a certain condition as one group based on the reception strength information transmitted from the terminal device 40. Then, the base station 20 determines a group to be used for the pointforming. The terminal device 40 acquires group determination information from the base station 20. Then, the terminal device 40 is connected to the base station 20 via the transmission devices of the group indicated by the group determination information.

Details of Type 2 (definition of group unit, group determination method, and procedure) will be described in detail later.

### <4-2. Characteristics of transmission device>

The outline of the operation of the communication system has been described above, and characteristics of the transmission device according to the present embodiment will be described before describing the details of Type 1 and Type 2. Specifically, characteristics of the base station 20 and the radio frequency (RF) device will be described. Note that the transmission device according to the present embodiment is not limited to the base station 20 and the RF device. For example, the transmission device according to the present embodiment may be the DU or the RU.

### <Features of base station>

The base station 20 of the present embodiment has the following features.

Feature 1: The base station 20 is subjected to the functional split and decomposed into at least two or more functions. As an example, the base station 20 is separated into the central unit (CU) that controls the lower layer as the upper layer and the distributed unit (DU) as the lower layer including the RF device. As another example, the base station 20 includes the central unit (CU) that controls the lower layer as the upper layer, the distributed unit (DU) as the lower layer that does not include the RF device, and the radio unit (RU) that includes one or more RF devices.

Feature 2: At least one of the divided functions has a logical or physical connection state with the control entity.

Feature 3: At least one of the divided functions includes one or more physical functions for transmitting or receiving the radio frequency (RF).

### <Features of RF device>

The RF device of the present embodiment has the following features.

Feature 1: Provided with a single or a plurality of antenna devices. Here, the antenna device indicates a device having a function of emitting or receiving an electromagnetic wave. The antenna device may have one or more physically separated electromagnetic wave emitting/receiving positions.

Feature 2: The RF device has a function of changing an amplitude or phase of electromagnetic wavs emitted/received in units of antenna devices or in units of electromagnetic wave emitting/receiving positions.

### <4-3. Detailed operation of communication system (Type 1)>

Based on the above, the operation of the communication system according to Type 1 will be described in detail.

In Type 1, the plurality of transmission devices is grouped into a plurality of groups, statically or semi-statically, based on a predetermined criterion. Grouping may be performed by a control device that controls a communication apparatus capable of pointforming.

At this time, the control device may be a communication apparatus itself capable of pointforming. For example, the control device may be the base station 20, the relay station 30, or the terminal device 40. Furthermore, the control device may be a device included in the communication apparatus. For example, the control device may be the control unit 23 of the base station 20, the control unit 33 of the relay station 30, or the control unit 43 of the terminal device 40. Furthermore, the control device may be a device that controls the communication apparatus via a network. For example, the control device may be the management device 10 or a server device on a network (e.g., the Internet).

The terminal device 40 acquires information for identifying a group used for pointforming (group identifying information) from each transmission device in two or more groups among the plurality of groups. For example, the terminal device 40 receives a predetermined signal from each of two or more groups of transmission devices among the plurality of groups. The terminal device 40 identifies a group to be used for pointforming from the two or more groups based on the group identifying information. For example, when the predetermined signal is received as the group identifying information, the terminal device 40 identifies a group to be used for pointforming from the two or more groups based on the strength of the signal received. At this time, the terminal device 40 may transmit information on the identified group to transmission devices in the identified group. Then, the terminal device 40 is connected to the base station 20 via the transmission devices in the identified group.

As described above, specific examples of the grouping method according to Type 1 include three types, Type 1-1 to Type 1-3. Type 1-1 to Type 1-3 will be described below.

### <4-3-1. Type 1-1>

First, the operation of the communication system 1 according to Type 1-1 will be described.

The control device acquires information for grouping the plurality of transmission devices (e.g., information regarding functional split of the base station 20). At this time, the plurality of transmission devices may be a plurality of DUs included in the base station 20, or may be a plurality of RUs included in the base station 20. Furthermore, the plurality of transmission devices may be a combination of one or more DUs and one or more RUs included in the base station 20. Then, the control device groups the plurality of transmission devices into a plurality of groups based on the information acquired (e.g., information regarding functional split of the base station 20). For example, the control device sets a group ID for each topology branch according to the topology realized by the functional split.

### (Example 1)

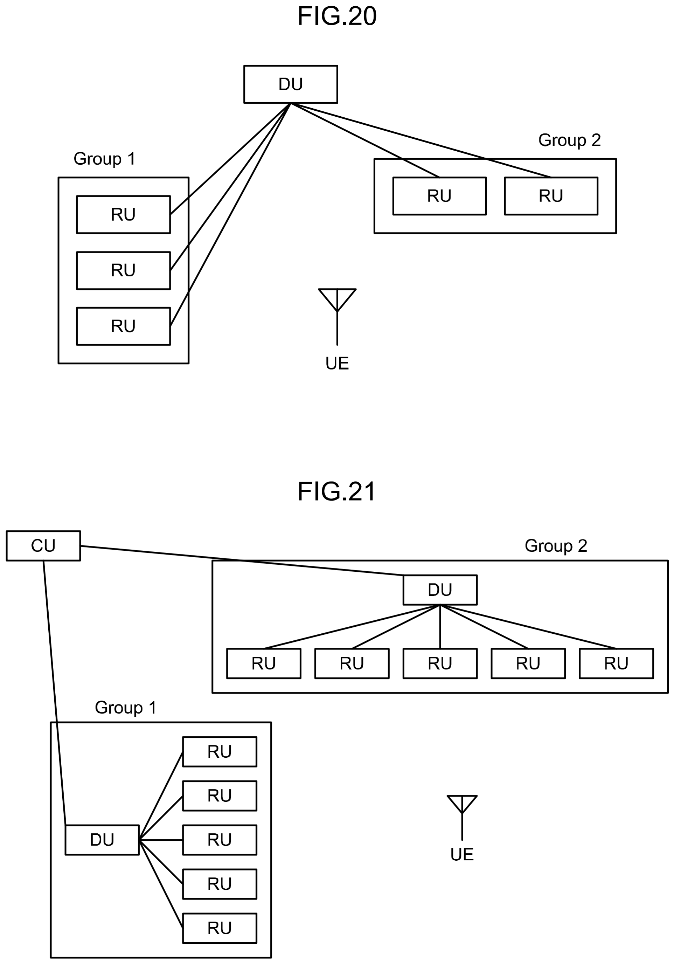

FIG. 20 is a diagram illustrating an example of grouping according to Type 1-1. In the example in FIG. 20, the plurality of transmission devices is a plurality of RUs included in the base station 20. The control device groups the plurality of RUs into a plurality of groups according to the functional split of the base station 20. For example, the management device groups the plurality of transmission devices (e.g., RF devices or RUs) managed by one DU into one or a plurality of groups. At this time, the same group ID may be set to the transmission devices in the same group. At this time, the control device may set the same group ID to all the transmission devices (e.g., an RF devices or RUs) managed by one DU, generated for a single communication bearer or protocol data unit (PDU) session. Here, the DU and the RU may be logically or physically coupled.

### (Example 2)

FIG. 21 is a diagram illustrating another example of grouping according to Type 1-1. In the example in FIG. 21, the plurality of transmission devices is a plurality of DUs and a plurality of RUs included in the base station 20. The control device groups the plurality of DUs and the plurality of RUs into a plurality of groups according to the functional split of the base station 20. For example, the management device groups a DU managed by one CU and a plurality of transmission devices (e.g., RF devices or RUs) associated with the DU into one or a plurality of groups. At this time, the same group ID may be set to the transmission devices in the same group. At this time, the control device may set the same group ID to all DUs managed by one CU and transmission devices (e.g., RF devices or RUs) associated with the DUs, generated for a single communication bearer or protocol data unit (PDU) session. Here, the CU, DU, and RU may be logically or physically coupled.

The terminal device 40 acquires the group identifying information from the transmission devices (DUs or RUs) in two or more groups among the plurality of groups. Then, the terminal device 40 identifies a group to be used for pointforming from the two or more groups based on the group identifying information. Then, the terminal device 40 is connected to the base station 20 via the transmission devices in the identified group.

According to Type 1-1, grouping is performed according to a topology of the functional split, so that impact on a current standard is small. Furthermore, when processing for sharing information is performed, such as a case where the transmission devices are synchronized for cooperative transmission, complicated processing, such as across the plurality of CUs, is suppressed.

### <4-3-2. Type 1-2>

Next, the operation of the communication system 1 according to Type 1-2 will be described.

The control device acquires information regarding a processing delay amount based on physical limitation of each of the plurality of transmission devices. At this time, the plurality of transmission devices may be a plurality of base stations 20, a plurality of DUs included in the base station 20, or a plurality of RUs included in the base station 20. Furthermore, the plurality of transmission devices may be a combination of one or more DUs and one or more RUs included in the base station 20. Then, the control device groups the plurality of transmission devices into a plurality of groups based on the information regarding the processing delay amount. The control device sets the group ID in the transmission devices under the condition that a processing delay from an external network, a core network, or a control entity to the base station 20 is within a certain amount according to the processing delay amount based on the physical limitation. Here, the processing delay is, for example, a transmission delay in a predetermined wireless or wired network (e.g., backhaul, midhaul, fronthaul, or a combination thereof).

Note that the control device may set a plurality of different group IDs in a single transmission device. For example, the control device may set different group IDs for a plurality of transmission devices having a delay amount of 1 msec or less and a plurality of transmission devices having a delay amount of 5 msec or less. In this case, each of the plurality of transmission devices having a delay amount of 1 msec or less has a plurality of different group IDs.

The control device may statically acquire information necessary for grouping before the connection process between the terminal device 40 and the base station 20. For example, the control device may measure the information regarding the processing delay amount before the connection process between the terminal device 40 and the base station 20. Furthermore, the control device may semi-statically determine the information necessary for grouping based on, for example, a relationship between the transmission device and the terminal device 40 or a relationship between the transmission device and an external network.

According to Type 1-2, since grouping is performed according to the processing delay amount based on the physical limitation, for example, there is an advantage when communication in which the delay amount becomes critical is requested.

### <4-3-3. Type 1-3>

Next, the operation of the communication system 1 according to Type 1-3 will be described.

In Type 1-3, a pointforming position and a plurality of transmission devices used when the terminal device 40 is located at that position are associated in advance. As a result, the base station 20 can determine the transmission device to be used to some extent just by the position information of the terminal device 40. It is assumed that this method is used, for example, when the base station 20 side can identify the position of the terminal device 40 to some extent. By grouping in advance, more efficient power concentration can be performed even when the pointforming is performed at the same position.

As described above, in Type 1-3, the plurality of transmission devices is grouped into a plurality of groups according to the position at which the pointforming is performed (e.g., position where a point cell is formed). For example, the control device acquires position information of each of the plurality of transmission devices. Then, the control device groups the plurality of transmission devices into a plurality of groups based on the position information. At this time, the plurality of transmission devices may be a plurality of base stations 20, a plurality of DUs included in the base station 20, or a plurality of RUs included in the base station 20.

The terminal device 40 acquires information for identifying a group used for pointforming from each of the transmission devices in two or more groups among the plurality of groups. Then, the terminal device 40 identifies a group to be used for communication via the point cell from the two or more groups based on the information acquired. At this time, each of the plurality of groups is associated with a position where the pointforming is performed, and the base station 20 may select, based on the position information of the terminal device 40, two or more groups to be used for the pointforming from the plurality of groups.

Here, the position information of the terminal device 40 may be, for example, one of the following (1) to (3).
(1) Absolute coordinate information acquired using a global positioning system (GPS) or the like.
(2) Information characterized by indicating an approximate position statically determined by a standard, such as a cell ID and a zone ID.
(3) Information characterized by calculation based on received power information from the terminal device 40.

According to Type 1-3, since the pointforming position and the plurality of transmission devices used when the terminal device 40 is located at the pointforming position are associated in advance, the terminal device 40 can quickly start communication using pointforming.

### <4-3-4. Group determination method and procedure>

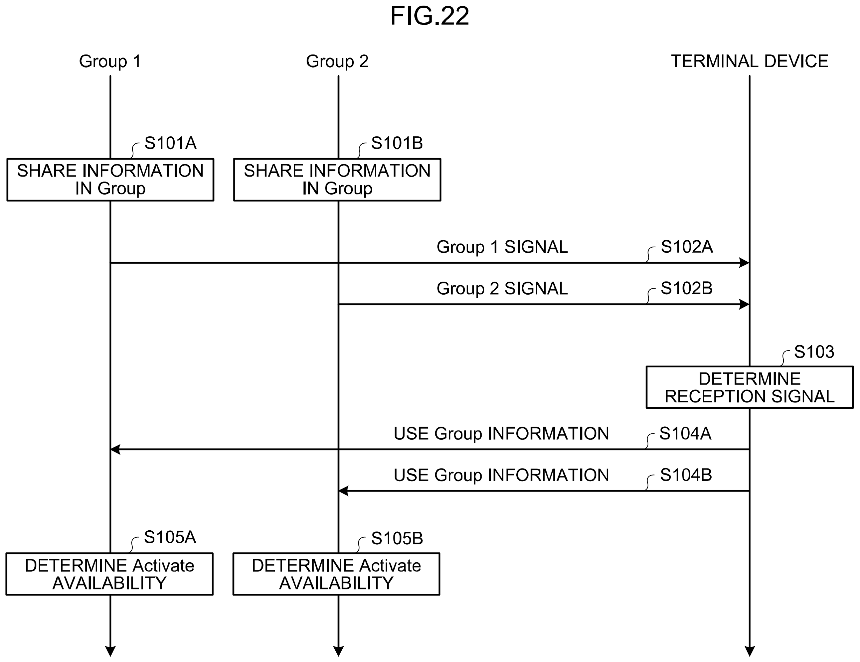

Next, a group determination method and procedure according to Type 1 will be described. FIG. 22 is a sequence diagram illustrating the group determination method and the procedure according to Type 1. Hereinafter, the group determination method and the procedure according to Type 1 will be described with reference to FIG. 22.

A plurality of transmission devices (e.g., base stations 20 or RUs) having the same group ID shares, in the group, information for cooperative transmission for the purpose of pointforming (Step S101A and Step S101B). The transmission devices may generate this information by using a signal from the terminal device 40 as a trigger. The information for cooperative transmission is, for example, information (signal) for synchronization and use resource information. It is apparent that the information for cooperative transmission is not limited thereto.

Note that the information for cooperative transmission may be shared under control of a MAC layer. In this case, a single DU may share information with transmission devices having the same group ID by using a common protocol.

Furthermore, the information for cooperative transmission may be shared under control of an RRC layer. In this case, a single DU may determine the information shared with transmission devices by using an RRC message from the terminal device 40 or information used for PDU session establishment.

Next, the plurality of transmission devices transmits signals to the terminal devices 40 in a group unit (Step S102A, Step S102B). At this time, one transmission device in the group may transmit the signal as a representative, or a plurality of transmission devices in the group may transmit the signal. Note that signals generated from transmission devices having different group IDs are desirably separated in terms of time, space, and/or frequency.

A mode of the signal transmission may vary depending on a mode of communication.

For example, when this method is implemented for initial connection, multiple transmission devices belonging to the same group ID may individually transmit the signal in a broadcast manner. In this case, the signal of each transmission device may include information for identifying the group so that it is known from which group the signal is transmitted. The identification information may be based on, for example, position information of the transmission device (e.g., base station 20 or RU) represented by the cell ID. Still more, the identification information may be associated with, for example, the RF device used. Still more, the identification information may be associated with identification of a logical data stream represented by, for example, a PDU session.

Furthermore, for example, when the transmission device (e.g., base station 20 or RU) can identify the position of the terminal device 40 with certain accuracy, a plurality of transmission devices belonging to the same group ID may perform pointforming in a cooperative manner to transmit the signal to the terminal device 40.

The terminal device 40 performs determination on the signal from the transmission device (e.g., base station 20 or RU) (Step S103). The determination method may vary depending on the mode of communication.

For example, when signals from the plurality of transmission devices are transmitted by broadcast, the terminal device 40 may determine based on a value obtained by adding reception strengths of signals having the same group ID. In this case, a high reception strength obtained by adding up a plurality of signals having a certain group ID indicates that there is a high possibility that a good communication state can be maintained with the plurality of transmission devices (base station 20 group or RU group) having that group ID.

Furthermore, for example, when signals from a plurality of transmission devices (base stations 20 or RUs) are transmitted by pointforming, the terminal device 40 may determine based on the reception strength. In this case, the group ID with the strongest reception strength indicates the base station group or the RU group having the best communication condition at the current position of the terminal device 40. From this point of view, it will a material for determining group selection.

The terminal device 40 selects one or more groups to be used in communication using pointforming, and transmits a selection result (use group information) to a plurality of transmission devices (Step S104A and Step S104B). At this time, the terminal device 40 may transmit the use group information to any single transmission device in the group, or may transmit the use group information to all the transmission devices belonging to the group. Note that the terminal device 40 may transmit information necessary for group selection by the base station 20 instead of transmitting the selection result. Various methods can be adopted as the selection method. For example, the terminal device 40 may select a group having the highest reception strength as viewed from the terminal device 40.

Note that the terminal device 40 may transmit different information to all the groups determined as groups. In this case, the information to be notified to each group is, for example, a determination result as to whether or not the group will be used.

The terminal device 40 may send the same information to all the groups determined as groups. In this case, the information to be notified is, for example, an ID of a group to be used. A group having an ID different from the notified ID terminates the group selection process for pointforming at the timing of receiving this notification. On the other hand, the group having the notified ID proceeds to a pointforming process.

The terminal device 40 may notify only the group determined to be used as a result of the group determination. In this case, the group receiving this notification proceeds to the pointforming process.

The plurality of transmission devices that have received the use group information determines 'active' availability in a group unit (Step S105A and Step S105B). The group determined to be activatable proceeds to the pointforming process.

### <4-3-5. Application example>

The procedure according to Type 1 is applicable to processing in an initial connection phase. For example, the procedure according to Type 1 is applicable to a random access procedure (e.g., four-step RACH). Hereinafter, a correspondence relationship between the procedure according to Type 1 and the random access procedure will be described.

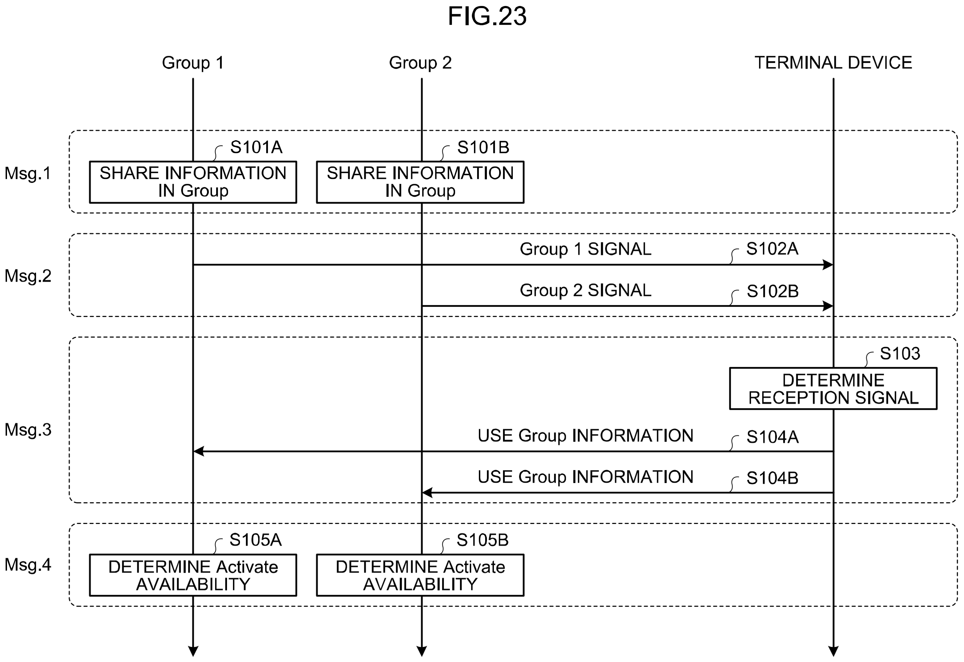

FIG. 23 is a diagram illustrating the correspondence relationship between the procedure according to Type 1 and the contention based random access procedure. The contention based random access procedure is the four-step random access procedure (four-step RACH). Steps S101A and S101B described above correspond to processing of Message 1 in the contention based random access procedure. Steps S102A and S102B described above correspond to processing of Message 2 in the contention based random access procedure. Steps S103, S104A, and S104B described above correspond to processing of Message 3 in the contention based random access procedure. Steps S105A and S105B described above correspond to processing of Message 3 in the contention based random access procedure.

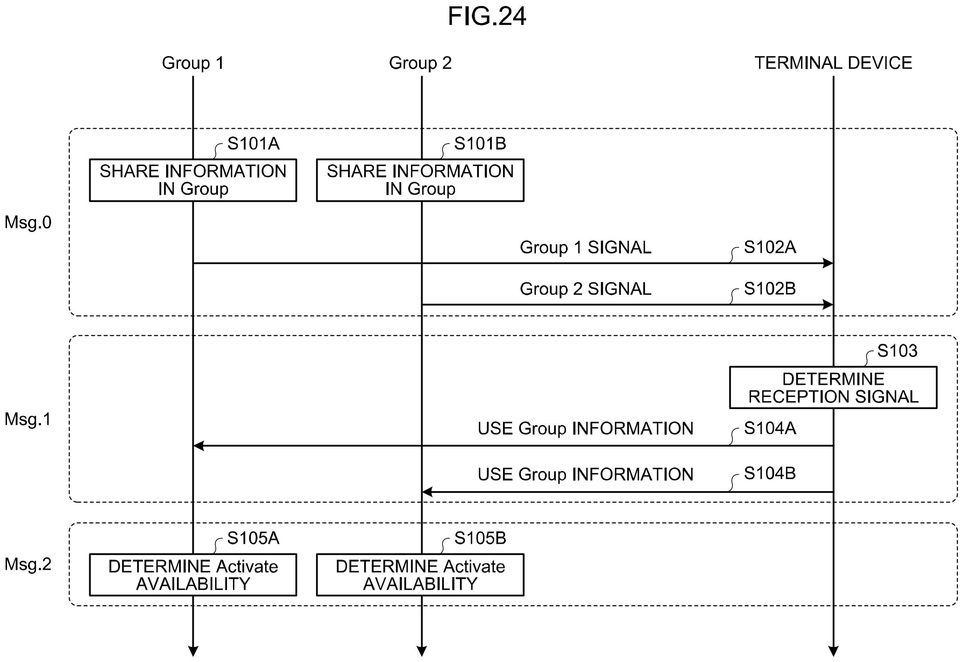

FIG. 24 is a diagram illustrating a correspondence relationship between the procedure according to Type 1 and the non-contention based random access procedure. The above-described Steps S101A, S101B, S102A, and S102B correspond to processing of Message 0 in the non-contention based random access procedure. The above-described Steps S103, S104A, and S104B correspond to processing of Message 1 in the non-contention based random access procedure. Steps S105A and S105B described above correspond to processing of Message 2 in the non-contention based random access procedure.

Note that the random access procedure to which the procedure according to Type 1 is applied is not limited to the contention based random access procedure and the non-contention based random access procedure. For example, the procedure according to Type 1 may be applied to the two-step random access procedure (two-step RACH).

### <4-3-6. Specific example of signal/information related to Type 1 procedure>

Next, a specific example of the signal/information related to the Type 1 procedure will be described.

### <Group 1 signal transmission and group 2 signal transmission>

A group 1 signal and a group 2 signal may be signals for measuring at least one of reference signal received power (RSRP), received signal strength indicator (RSSI), reference signal received quality (RSRQ), and signal to interference plus noise ratio (SINR). For example, the group 1 signal and the group signal may be signals for measuring L1-RSRP.

Here, RSRP (e.g., L1-RSRP) is reception power of a desired signal, and may be a signal included below.
(1) Acquisition information
(2) SS block (SSB), SSB resource Indicator (SSBRI), or secondary synchronization signal (SSS)
   · Synchronization signal (SS) or SS physical broadcast channel (SS PBCH)
   SS-RSRP
   SS-RSRQ
   SS-SINR
   ssb-index-SINR(RRC parameter)
   ssb-index-RSRP(RRC parameter)
(3) CSI-RS(CSI - Reference Signal)/CSI(Channel State Information)
   · CSI-RSRP
   · CSI-RSRQ
   · CSI-SINR
   · cri-RI-PMI-CQI (RRC parameter)
   · cri-RI-LI-PMI-CQI (RRC parameter)
   · cri-RI-i1 (RRC parameter)
   · cri-RI-i1-CQI (RRC parameter)
   · cri-RI-CQI (RRC parameter)
   · cri-RSRP (RRC parameter)
   · cri-SINR (RRC parameter)
(4) RRC reconfiguration message
   · RRC reconfiguration request
(5) Master information block (MIB) or system information block (SIB)

For example, a new format of the SIB may be defined.

### <Use group information>

The use group information may be transmitted as follows.
(1) CSI report
(2) RRC reconfiguration response

### <4-4. Detailed operation of communication system (Type 2)>

Next, the operation of the communication system 1 according to Type 2 will be described in detail.

In Type 2, a plurality of transmission devices is dynamically grouped into one or a plurality of groups (transmission device groups). For example, in Type 2, the plurality of transmission devices is dynamically grouped based on information from the terminal device 40, a channel state, or a resource usage status.

At this time, the control device may be a communication apparatus itself capable of pointforming. For example, the control device may be the base station 20, the relay station 30, or the terminal device 40. Furthermore, the control device may be a device included in the communication apparatus. For example, the control device may be the control unit 23 of the base station 20, the control unit 33 of the relay station 30, or the control unit 43 of the terminal device 40. Furthermore, the control device may be a function (e.g., CU) included in the base station 20. Furthermore, the control device may be a device that controls the communication apparatus via a network. For example, the control device may be the management device 10 or a server device on a network (e.g., the Internet).

For example, the terminal device 40 transmits information for determining a group to be used for pointforming to the control device (e.g., management device 10 or CU). At this time, the terminal device 40 may transmit, to the base station 20, the strength information of the signal received from the transmission device as the information for determining the group. The control device (e.g., management device 10 or base station 20) acquires, from the terminal device 40, the information for determining a group to be used for pointforming (e.g., signal strength information).

The control device (e.g., management device 10 or CU) groups a plurality of transmission devices into one or more groups based on the information acquired from the terminal device 40. For example, the control device determines whether or not each of the transmission devices can be used for pointforming based on the strength information transmitted from the terminal device 40. When the number of transmission devices that can be used is equal to or larger than the assumed number, the control device groups these transmission devices into one or more groups, and determines a group to be used for pointforming from the one or more groups based on the strength information.

The control device (e.g., management device 10 or CU) transmits the determination information of the group to be used for pointforming to the terminal device 40. The terminal device 40 acquires the determination information of the group to be used for pointforming from the base station 20. The terminal device 40 identifies the group to be used for pointforming based on the determination information. Then, the terminal device 40 is connected to the base station 20 via the transmission devices in the identified group.

According to type 2, since the transmission devices to be used are dynamically determined based on the information (e.g., strength information of the received signal) from the terminal device 40, flexible pointforming according to the communication situation is realized. For example, when the communication environment is a distributed antenna environment, the control device can flexibly change the number of transmission devices used for pointforming without being bound to grouping by advance information. As a result, pointforming communication having high-communication-performance is achieved.

Note that a criterion for determining whether the transmission device can be used for pointforming, a criterion for the number of transmission devices that can perform pointforming, and the like depend on the mode communication by the communication system 1. Details thereof will be described below.

### <4-4-1. Group determination method and procedure>

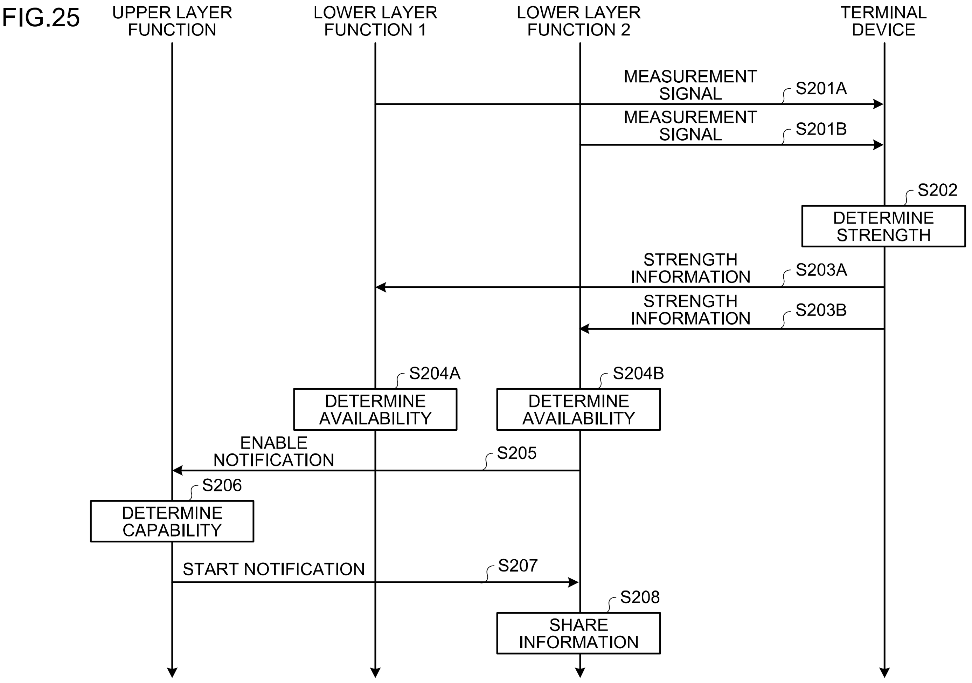

Next, a group determination method and a procedure according to Type 2 will be described. FIG. 25 is a sequence diagram illustrating the group determination method and the procedure according to Type 2.

Note that a lower layer function and an upper layer function illustrated in FIG. 25 are described below.

The upper layer function has a logical or physical connection to each of at least two or more lower layer functions, and can control the lower layer functions. The upper layer function and the lower layer function may be included in one communication apparatus that implements the pointforming function. In addition, the upper layer function and the lower layer function may be realized by a plurality of communication apparatuses that realize the pointforming function. Information is exchanged between the upper layer and the lower layer via a connection interface present therebetween.

As an example, some correspondence relationships between the upper layer function, lower layer function, and the connection interface therebetween are described below. Note that the configuration of the communication system 1 according to the present embodiment is not limited only to the following correspondence relationships.

### (Correspondence relationship 1)

Upper layer function: 5G core network (5GC)
Lower layer function: CU function
Connection interface: NG interface

### (Correspondence relationship 2)

Upper layer function: CU function
Lower layer function: DU function
Connection interface: F1 interface

### (Correspondence relationship 3)

Upper layer function: DU function (not including at least RF function)
Lower layer function: DU function (including at least RF function) or RU
Connection interface: Fronthaul (e.g., optical line or logical connection)

### (Correspondence relationship 4)

Upper layer function: gNB
Lower layer function: gNB
Connection interface: Xn interface

In the following description, a device having the lower layer function may be referred to as a transmission device, and a device having the upper layer function may be referred to as a host device. The host device is, for example, the control device described above. The transmission device may be the base station 20, may be the DU included in the base station 20, or may be a plurality of RUs included in the base station 20. Note that one transmission device may have the upper layer function and one or more lower layer functions. Hereinafter, the group determination method and the procedure according to Type 2 will be described with reference to FIG. 25.

The transmission device having the lower layer function (e.g., base station 20 or RU) transmits a signal for the purpose of obtaining the reception strength information from the terminal device 40 (Step S201A and Step S201B). For example, each of a plurality of transmission devices having the lower layer function transmits the signal by broadcast. In this case, the signal of each transmission device may include information for identifying the transmission device so that it known from which transmission device the signal is transmitted. This signal may be transmitted in association with a signal transmitted for other purposes. For example, the transmission of this signal may be secondarily transmitted at the time of execution of the initial connection phase (e.g., at transmitting PSS, SSS, PRACH, or the like).

The terminal device 40 determines the reception strength of the signal transmitted from each transmission device (Step S202). Then, the terminal device 40 transmits the strength information determined to each transmission device (Step S203A and Step S203B). This information may be transmitted in association with information transmitted for other purposes.

Each transmission device determines whether or not the transmission device itself can perform the pointforming based on the strength information from the terminal device 40 (Step S204A and Step S204B). At this time, the transmission device may determine whether or not the pointforming can be performed based on a criterion that the reception strength of the terminal device 40 is greater than a predetermined value.

The transmission device (e.g., base station 20 or RU) capable of performing the pointforming transmits a notification indicating that the pointforming is feasible (hereinafter referred to as a pointforming enable notification) to the host device (Step S205). As described above, the host device is a device having the upper layer function, and the host device may be a CU or a control entity (e.g., management device 10). However, it is apparent that the host device is not limited thereto.

The host device determines, based on the pointforming enable notification, whether or not it is possible to provide communication using the pointforming to the terminal device 40 (Step S206). For example, the host device counts the number of transmission devices capable of pointforming based on the pointforming enable notification. Then, when the number of transmission devices capable of pointforming exceeds a predetermined value, the host device determines that communication using pointforming can be provided to the terminal device 40.

The host device groups the plurality of transmission devices that can be used for pointforming into a plurality of groups. Then, the host device determines a group to be used for pointforming from the plurality of groups. Note that the host device may set a plurality of transmission devices that can be used for pointforming as a first group, and may set other transmission devices that cannot be used for pointforming as a second group. At this time, the host device may determine the first group as a group to be used for pointforming. The host device transmits a pointforming start notification to the plurality of transmission devices belonging to the group determined (Step S207).

The plurality of transmission devices (e.g., base station 20 or RU) having received the pointforming start notification shares information for cooperative transmission for the purpose of pointforming within the group (Step S208). The transmission devices may generate this information by using a signal from the terminal device 40 as a trigger. The information for cooperative transmission is, for example, information (signal) for synchronization and use resource information. It is apparent that the information for cooperative transmission is not limited thereto.

Note that the information for cooperative transmission may be shared under control of a MAC layer. In this case, a single DU may share information with transmission devices having the same group ID by using a common protocol.

Furthermore, the information for cooperative transmission may be shared under control of an RRC layer. In this case, a single DU may determine the information shared with transmission devices by using an RRC message from the terminal device 40 or information used for PDU session establishment.

After sharing the information, the plurality of transmission devices proceeds to the pointforming process.

### <4-4-2. Application example>

The procedure according to Type 2 is applicable to processing in the initial connection phase. For example, the procedure according to Type 2 is applicable to the random access procedure (e.g., four-step RACH). Hereinafter, a correspondence relationship between the procedure according to Type 2 and the random access procedure will be described.

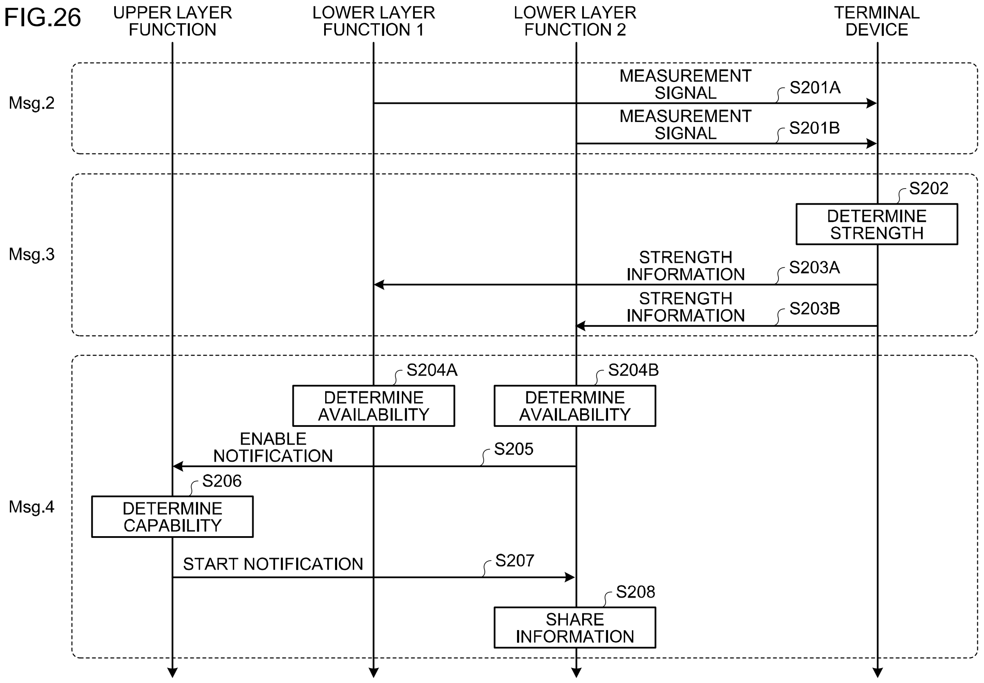

FIG. 26 is a diagram illustrating the correspondence relationship between the procedure according to Type 2 and the contention based random access procedure. The contention based random access procedure is the four-step random access procedure (four-step RACH). Steps S201A and S201B described above correspond to processing of Message 2 in the contention based random access procedure. Steps S202, S203A, and S203B described above correspond to processing of Message 3 in the contention based random access procedure. The above-described Steps S204A, S204B, S205, S206, S207, and S208 correspond to processing of Message 4 in the contention based random access procedure.

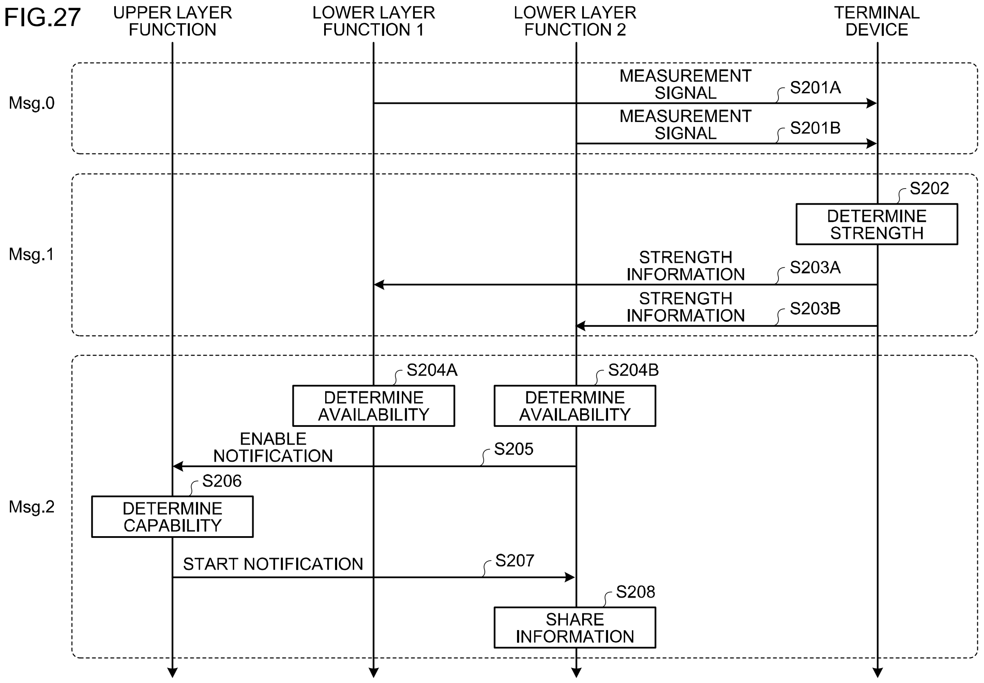

FIG. 27 is a diagram illustrating the correspondence relationship between the procedure according to Type 2 and the non-contention based random access procedure. The above-described Steps S201A and S201B correspond to processing of Message 0 in the non-contention based random access procedure. The above-described Steps S202, S203A, and S203B correspond to processing of Message 1 in the non-contention based random access procedure. The above-described Steps S204A, S204B, S205, S206, S207, and S208 correspond to processing of Message 2 in the non-contention based random access procedure.

Note that the random access procedure to which the procedure according to Type 1 is applied is not limited to the contention based random access procedure and the non-contention based random access procedure. For example, the procedure according to Type 1 may be applied to the two-step random access procedure (two-step RACH).

### <4-4-3. Specific example of signal/information related to Type 2 procedure>

Next, a specific example of the signal/information related to the Type 2 procedure will be described.

### <Measurement signal for reception signal strength>

The measurement signal for reception signal strength may be a signal for measuring at least one of reference signal received power (RSRP), received signal strength indicator (RSSI), reference signal received quality (RSRQ), and signal to interference plus noise ratio (SINR). For example, the group 1 signal and the group signal may be signals for measuring L1-RSRP.

Here, RSRP (e.g., L1-RSRP) is reception power of a desired signal, and may be a signal included below.
(1) Acquisition information
(2) SS block (SSB), SSB resource Indicator (SSBRI), or secondary synchronization signal (SSS)
   · Synchronization signal (SS) or SS physical broadcast channel (SS PBCH)
   SS-RSRP
   SS-RSRQ
   SS-SINR
   ssb-index-SINR(RRC parameter)
   ssb-index-RSRP(RRC parameter)
(3) CSI-RS(CSI - Reference Signal)/CSI(Channel State Information)
   · CSI-RSRP
   · CSI-RSRQ
   · CSI-SINR
   · cri-RI-PMI-CQI (RRC parameter)
   · cri-RI-LI-PMI-CQI (RRC parameter)
   · cri-RI-i1 (RRC parameter)
   · cri-RI-i1-CQI (RRC parameter)
   · cri-RI-CQI (RRC parameter)
   · cri-RSRP (RRC parameter)
   · cri-SINR (RRC parameter)
(4) RRC reconfiguration message
   · RRC reconfiguration request
(5) Master information block (MIB) or system information block (SIB)

For example, a new format of the SIB may be defined.

### <Strength information of reception signal>

The strength information of the received signal may be transmitted as follows.
(1) CSI report
(2) RRC reconfiguration response

### < Pointforming enable notification>

The pointforming enable notification may be sent as follows.
(1) F1 Interface
   · gNB-CU configuration update
   · Context Management
   · System Information
(2) Xn-C/U Interhface
(3) Control PDU
   · PDCP Control PDU
   · RLC Control PDU
(4) BAP Routing Address

### <Pointforming start notification>

The pointforming start notification may be sent as follows.
(1) F1 Interface
   · gNB-CU configuration update
   · Context Management
   · System Information
(2) Xn-C/U Interhface
(3) Control PDU
   · PDCP Control PDU
   · RLC Control PDU

### (4) BAP Routing Address

### <<5. Modifications>>

The above-described embodiments are examples, and various modifications and applications are possible.

In the above-described embodiments, wireless communication using a technology of concentrating power (power concentration technique) at a specific point using the phase difference of the near field has been described. However, the wireless communication related to the pointforming according to the present embodiment may be near-field communication. Here, the near-field communication may be communication in a distance shorter than the Fraunhofer distance determined by a frequency band and an opening length of a transmission panel.

In the above-described embodiments, the technology of the present disclosure has been mainly described by taking the communication process between the base station 20 and the terminal device 40 as an example. However, the scope of application of the present embodiment is not limited thereto. For example, the technology of the present disclosure is also applicable to communication between a plurality of communication apparatuses selected from the management device 10, the base station 20, the relay station 30, and the terminal device 40. Furthermore, the technology of the present disclosure is also applicable to communication between the management devices 10, between the base stations 20, between the relay stations 30, or between the terminal devices 40.

The control device that controls the management device 10, the base station 20, the relay station 30, or the terminal device 40 of the present embodiment may be realized by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, the program is installed on a computer, and the above-described processes are executed to configure the control device. Here, the control device may be a device (e.g., personal computer) outside the management device 10, the base station 20, the relay station 30, or the terminal device 40. Furthermore, the control device may be a device inside the management device 10, the base station 20, the relay station 30, or the terminal device 40 (e.g., the control unit 13, the control unit 23, the control unit 33, or the control unit 43).

In addition, the communication program may be stored in a disk device included in the server on the network such as the Internet so that the communication program can be downloaded to a computer. In addition, the above-described functions may be realized by cooperation of an operating system (OS) and application software. In this case, a portion other than the OS may be stored in a medium and distributed, or a portion other than the OS may be stored in the server and downloaded to the computer.

Among the processes described in the above embodiments, all or part of the processes described as being performed automatically can be performed manually, or all or part of the processes described as being performed manually can be performed automatically by a known method. In addition, the processing procedure, specific name, and information including various data and parameters illustrated in the above document and the drawings can be arbitrarily changed unless otherwise specified. For example, various types of information illustrated in each drawing are not limited to the illustrated information.

In addition, each component of each device illustrated in the drawings is functionally conceptual, and is not necessarily physically configured as illustrated in the drawings. In other words, a specific form of distribution or integration of each device is not limited to the illustrated form, and all or a part thereof can be functionally or physically distributed and integrated in an arbitrary unit according to various loads, usage conditions, and the like. Note that this distributed or integrated configuration may be performed dynamically.

In addition, the above-described embodiments can be appropriately combined in a region in which the processing content do not contradict each other. Furthermore, the order of each step illustrated in the flowcharts and the sequence diagrams of the above-described embodiments may be changed as appropriate.

Furthermore, for example, the present embodiment can be implemented as any configuration constituting an apparatus or a system, for example, a processor as a system large scale integration (LSI) or the like, a module using a plurality of processors or the like, a unit using a plurality of modules or the like, a set obtained by further adding other functions to a unit, or the like (i.e., configuration of a part of device).

Note that, in the present embodiment, the system means a set of a plurality of components (devices, modules (parts), etc.), and it does not matter whether or not all the components are in the same housing. Therefore, a plurality of devices housed in separate housings and connected via a network and one device in which a plurality of modules is housed in one housing are both systems.

Furthermore, for example, the present embodiments can adopt a configuration of cloud computing in which one function is shared and processed by a plurality of devices in cooperation via a network.

### <<6. Conclusion>>

The terminal device 40 acquires information for identifying a group used for pointforming (group identifying information). Then, the terminal device identifies a group to be used for pointforming from the two or more groups based on the information acquired. The terminal device is connected to the base station 20 via the transmission device in the identified group.

As described above, in the present embodiment, since the transmission devices to be used for pointforming are grouped, the terminal device 40 can efficiently select the transmission devices to be used for the pointforming. As a result, since an amount of processing required until the start of data communication is reduced, the communication system 1 can realize pointforming with high communication performance.

Although the embodiments of the present disclosure have been described above, the technical scope of the present disclosure is not limited to the above-described embodiments as it is, and various modifications can be made without departing from the gist of the present disclosure. In addition, the components of different embodiments and modifications may be appropriately combined.

Note that the effects of each embodiment described in the present specification are merely examples and not limited thereto, and other effects may be provided.

The present technology may also have the following configurations.
(1) A terminal device that performs communication via a point cell formed by two or more transmission devices among a plurality of transmission devices, the terminal device comprising:
   an acquisition unit configured to acquire information for identifying a transmission device group; and
   a communication control unit configured to execute processing related to the communication via the point cell based on the information acquired.
(2) The terminal device according to (1), wherein
   the plurality of transmission devices is grouped into a plurality of groups based on a predetermined criterion,
   the acquisition unit acquires information for identifying a group to be used for the communication via the point cell from each of the plurality of transmission devices in two or more groups among the plurality of groups, and
   the communication control unit identifies the group to be used for the communication via the point cell from the two or more groups based on the information acquired.
(3) The terminal device according to (2), wherein
   the plurality of transmission devices is grouped into the plurality of groups based on the predetermined criterion,
   the acquisition unit receives a predetermined signal from the each transmission device in the two or more groups among the plurality of groups, and
   the communication control unit identifies the group to be used for the communication via the point cell from the two or more groups based on a strength of a signal received.
(4) The terminal device according to (3), wherein
   the communication control unit transmits information on the group identified to at least a transmission device in the group identified.
(5) The terminal device according to any one of (1) to (4), wherein
   the plurality of transmission devices is a plurality of distributed units (DUs) or a plurality of radio units (RUs) included in a base station,
   the plurality of DUs or the plurality of RUs is grouped into a plurality of groups according to a functional split of the base station,
   the acquisition unit acquires information for identifying a group of the DUs or the RUs to be used for the communication via the point cell, and
   the communication control unit identifies the group of the DUs or the RUs to be used for the communication via the point cell based on the information acquired.
(6) The terminal device according to (5), wherein
   the plurality of transmission devices is the plurality of RUs included in the base station,
   the plurality of RUs is grouped into the plurality of groups according to the functional split of the base station,
   the acquisition unit acquires the information for identifying the group of the RUs to be used for the communication via the point cell, and
   the communication control unit identifies the group of the RUs to be used for the communication via the point cell based on the information acquired.
(7) The terminal device according to any one of (1) to (4), wherein
   the plurality of transmission devices is grouped into a plurality of groups according to a processing delay amount based on a physical limitation,
   the acquisition unit acquires information for identifying a group to be used for the communication via the point cell from each of the plurality of transmission devices in two or more groups among the plurality of groups, and
   the communication control unit identifies the group to be used for the communication via the point cell from the two or more groups based on the information acquired.
(8) The terminal device according to (7), wherein
   the plurality of transmission devices is a plurality of base stations or a plurality of RUs included in a base station.
(9) The terminal device according to any one of (1) to (4), wherein
   the plurality of transmission devices is grouped into a plurality of groups according to a position where the communication via the point cell is performed,
   the acquisition unit acquires information for identifying a group to be used for the communication via the point cell from each of the plurality of transmission devices in two or more groups among the plurality of groups, and
   the communication control unit identifies the group to be used for the communication via the point cell from the two or more groups based on the information acquired.
(10) The terminal device according to (9), wherein
   each of the plurality of groups is associated with the position where the communication via the point cell is performed, and
   the two or more groups are groups selected from the plurality of groups according to position information of the terminal device.
(11) The terminal device according to (9) or (10), wherein
   the plurality of transmission devices is a plurality of base stations or a plurality of RUs included in a base station.
(12) The terminal device according to (1), wherein
   the communication control unit transmits, to a base station, information for determining a group to be used for the communication via the point cell,
   the acquisition unit acquires, from the base station, determination information on the group to be used for the communication via the point cell, and
   the communication control unit identifies the group to be used for the communication via the point cell based on the determination information.
(13) The terminal device according to (12), wherein
   the communication control unit transmits strength information of a signal received from the plurality of transmission devices to the base station as the information for determining the group to be used for the communication via the point cell,
   the acquisition unit acquires the determination information determined based on the strength information from the base station, and
   the communication control unit identifies the group to be used for the communication via the point cell based on the determination information.
(14) A control device that controls a communication apparatus performing communication via a point cell formed by two or more transmission devices among a plurality of transmission devices, the control device comprising:
   an acquisition unit configured to acquire information for grouping the plurality of transmission devices to be used for the communication via the point cell; and
   a grouping unit configured to group the plurality of transmission devices into one or more groups based on the information acquired.
(15) The control device according to (14), wherein
   the plurality of transmission devices is a plurality of DUs or a plurality of RUs included in a base station,
   the acquisition unit acquires information on a functional split of the base station, and
   the grouping unit groups the plurality of transmission devices into the one or more groups based on the information on a functional split of the base station.
(16) The control device according to (14), wherein
   the acquisition unit acquires information on a processing delay amount based on a physical limitation of each of the plurality of transmission devices, and
   the grouping unit groups the plurality of transmission devices into the one or more groups based on the information on a processing delay amount.
(17) The control device according to (14), wherein
   the acquisition unit acquires position information of each of the plurality of transmission devices, and
   the grouping unit groups the plurality of transmission devices into the one or more groups based on the position information.
(18) The control device according to (14), wherein
   the acquisition unit acquires information for determining the group to be used for the communication via the point cell from a terminal device that performs the communication via the point cell, and
   the grouping unit groups the plurality of transmission devices into a plurality of groups based on the information acquired from the terminal device.
(19) A communication method implemented by a terminal device that performs communication via a point cell formed by two or more transmission devices among a plurality of transmission devices, the communication method comprising:
   acquiring information for identifying a group of the plurality of transmission devices to be used for the communication via the point cell; and
   executing processing related to the communication via the point cell based on the information acquired.
(20) An information processing method implemented by a control device that controls a communication apparatus performing communication via a point cell formed by two or more transmission devices among a plurality of transmission devices, the information processing method comprising:
   acquiring information for grouping the plurality of transmission devices to be used for the communication via the point cell; and
   grouping the plurality of transmission devices into one or more groups based on the information acquired.

### Reference Signs List

1 COMMUNICATION SYSTEM
10 MANAGEMENT DEVICE
20 BASE STATION
30 RELAY STATION
40 TERMINAL DEVICE
11 COMMUNICATION UNIT
21, 31, 41 WIRELESS COMMUNICATION UNIT
12, 22, 32, 42 STORAGE UNIT
13, 23, 33, 43 CONTROL UNIT
211, 311, 411 TRANSMISSION PROCESSING UNIT
212, 312, 412 RECEPTION PROCESSING UNIT
213, 313, 413 ANTENNA
131, 231, 331, 431 ACQUISITION UNIT
132, 232, 332, 432 GROUPING UNIT
133, 233, 333, 433 COMMUNICATION CONTROL UNIT
RAN RADIO ACCESS NETWORK
CN CORE NETWORK

## Claims

1. A terminal device that performs communication via a point cell formed by two or more transmission devices among a plurality of transmission devices, the terminal device comprising:
an acquisition unit configured to acquire information for identifying a transmission device group; and
a communication control unit configured to execute processing related to the communication via the point cell based on the information acquired.

2. The terminal device according to claim 1, wherein
the plurality of transmission devices is grouped into a plurality of groups based on a predetermined criterion,
the acquisition unit acquires information for identifying a group to be used for the communication via the point cell from each of the plurality of transmission devices in two or more groups among the plurality of groups, and
the communication control unit identifies the group to be used for the communication via the point cell from the two or more groups based on the information acquired.

3. The terminal device according to claim 2, wherein
the plurality of transmission devices is grouped into the plurality of groups based on the predetermined criterion,
the acquisition unit receives a predetermined signal from the each transmission device in the two or more groups among the plurality of groups, and
the communication control unit identifies the group to be used for the communication via the point cell from the two or more groups based on a strength of a signal received.

4. The terminal device according to claim 3, wherein
the communication control unit transmits information on the group identified to at least a transmission device in the group identified.

5. The terminal device according to claim 1, wherein
the plurality of transmission devices is a plurality of distributed units (DUs) or a plurality of radio units (RUs) included in a base station,
the plurality of DUs or the plurality of RUs is grouped into a plurality of groups according to a functional split of the base station,
the acquisition unit acquires information for identifying a group of the DUs or the RUs to be used for the communication via the point cell, and
the communication control unit identifies the group of the DUs or the RUs to be used for the communication via the point cell based on the information acquired.

6. The terminal device according to claim 5, wherein
the plurality of transmission devices is the plurality of RUs included in the base station,
the plurality of RUs is grouped into the plurality of groups according to the functional split of the base station,
the acquisition unit acquires the information for identifying the group of the RUs to be used for the communication via the point cell, and
the communication control unit identifies the group of the RUs to be used for the communication via the point cell based on the information acquired.

7. The terminal device according to claim 1, wherein
the plurality of transmission devices is grouped into a plurality of groups according to a processing delay amount based on a physical limitation,
the acquisition unit acquires information for identifying a group to be used for the communication via the point cell from each of the plurality of transmission devices in two or more groups among the plurality of groups, and
the communication control unit identifies the group to be used for the communication via the point cell from the two or more groups based on the information acquired.

8. The terminal device according to claim 7, wherein
the plurality of transmission devices is a plurality of base stations or a plurality of RUs included in a base station.

9. The terminal device according to claim 1, wherein
the plurality of transmission devices is grouped into a plurality of groups according to a position where the communication via the point cell is performed,
the acquisition unit acquires information for identifying a group to be used for the communication via the point cell from each of the plurality of transmission devices in two or more groups among the plurality of groups, and
the communication control unit identifies the group to be used for the communication via the point cell from the two or more groups based on the information acquired.

10. The terminal device according to claim 9, wherein
each of the plurality of groups is associated with the position where the communication via the point cell is performed, and
the two or more groups are groups selected from the plurality of groups according to position information of the terminal device.

11. The terminal device according to claim 9, wherein
the plurality of transmission devices is a plurality of base stations or a plurality of RUs included in a base station.

12. The terminal device according to claim 1, wherein
the communication control unit transmits, to a base station, information for determining a group to be used for the communication via the point cell,
the acquisition unit acquires, from the base station, determination information on the group to be used for the communication via the point cell, and
the communication control unit identifies the group to be used for the communication via the point cell based on the determination information.

13. The terminal device according to claim 12, wherein
the communication control unit transmits strength information of a signal received from the plurality of transmission devices to the base station as the information for determining the group to be used for the communication via the point cell,
the acquisition unit acquires the determination information determined based on the strength information from the base station, and
the communication control unit identifies the group to be used for the communication via the point cell based on the determination information.

14. A control device that controls a communication apparatus performing communication via a point cell formed by two or more transmission devices among a plurality of transmission devices, the control device comprising:
an acquisition unit configured to acquire information for grouping the plurality of transmission devices to be used for the communication via the point cell; and
a grouping unit configured to group the plurality of transmission devices into one or more groups based on the information acquired.

15. The control device according to claim 14, wherein
the plurality of transmission devices is a plurality of DUs or a plurality of RUs included in a base station,
the acquisition unit acquires information on a functional split of the base station, and
the grouping unit groups the plurality of transmission devices into the one or more groups based on the information on a functional split of the base station.

16. The control device according to claim 14, wherein
the acquisition unit acquires information on a processing delay amount based on a physical limitation of each of the plurality of transmission devices, and
the grouping unit groups the plurality of transmission devices into the one or more groups based on the information on a processing delay amount.

17. The control device according to claim 14, wherein
the acquisition unit acquires position information of each of the plurality of transmission devices, and
the grouping unit groups the plurality of transmission devices into the one or more groups based on the position information.

18. The control device according to claim 14, wherein
the acquisition unit acquires information for determining the group to be used for the communication via the point cell from a terminal device that performs the communication via the point cell, and
the grouping unit groups the plurality of transmission devices into a plurality of groups based on the information acquired from the terminal device.

19. A communication method implemented by a terminal device that performs communication via a point cell formed by two or more transmission devices among a plurality of transmission devices, the communication method comprising:
acquiring information for identifying a group of the plurality of transmission devices to be used for the communication via the point cell; and
executing processing related to the communication via the point cell based on the information acquired.

20. An information processing method implemented by a control device that controls a communication apparatus performing communication via a point cell formed by two or more transmission devices among a plurality of transmission devices, the information processing method comprising:
acquiring information for grouping the plurality of transmission devices to be used for the communication via the point cell; and
grouping the plurality of transmission devices into one or more groups based on the information acquired.
